(19) Europäisches Patentamt / European Patent Office / Office européen des brevets

(11) **EP 4 144 022 B1**

(12) **EUROPEAN PATENT SPECIFICATION**

(45) Date of publication and mention of the grant of the patent:
**08.04.2026 Bulletin 2026/15**

(21) Application number: **21722445.0**

(22) Date of filing: **28.04.2021**

(51) International Patent Classification (IPC):
*H04L 5/00* $^{(2006.01)}$    *H04L 1/00* $^{(2006.01)}$
*H04L 27/26* $^{(2006.01)}$

(52) Cooperative Patent Classification (CPC):
**H04L 5/005; H04L 5/0073;** H04L 5/0007;
H04L 27/261

(86) International application number:
**PCT/EP2021/061195**

(87) International publication number:
**WO 2021/219757 (04.11.2021 Gazette 2021/44)**

(54) **PARTIALLY OVERLAPPED CSI-RS SHIFTING**

TEILWEISE ÜBERLAPPENDE CSI-RS-VERSCHIEBUNG

DÉCALAGE DE CSI-RS PARTIELLEMENT CHEVAUCHÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2020 US 202063018111 P**

(43) Date of publication of application:
**08.03.2023 Bulletin 2023/10**

(73) Proprietor: **Telefonaktiebolaget LM ERICSSON (PUBL)**
**16483 Stockholm (SE)**

(72) Inventors:
• **FAXÉR, Sebastian**
  **11248 Stockholm (SE)**
• **BETTER, David**
  **18736 Täby (SE)**

(74) Representative: **Ericsson**
**Patent Development**
**Torshamnsgatan 21-23**
**164 80 Stockholm (SE)**

(56) References cited:
**WO-A1-2020/058743**

• **HUAWEI: "Inter-cell CSI-RS Analysis", 3GPP DRAFT; R1-100248 INTER-CELL CSI RS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 14 January 2010 (2010-01-14), XP050418351**
• **QUALCOMM EUROPE: "Details of CSI-RS", 3GPP DRAFT; R1-094214 CSI-RS DETAILS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Miyazaki; 20091012 - 20091016, 9 October 2009 (2009-10-09), XP050597789**

**Description**

FIELD

The present disclosure relates to wireless communications, and in particular, to partially overlapped channel state information reference signal (CSI-RS) shifting.

BACKGROUND

*NR Frame Structure*

The Third Generation Partnership Project (3GPP) next generation mobile wireless communication system (3GPP 5th Generation (5G), also called New Radio or NR), supports a diverse set of use cases and a diverse set of deployment scenarios. The later includes deployment at both low frequencies (100s of MHz), similar to Long Term Evolution (LTE) today, and very high frequencies (millimeter (mm) waves in the tens of GHz).

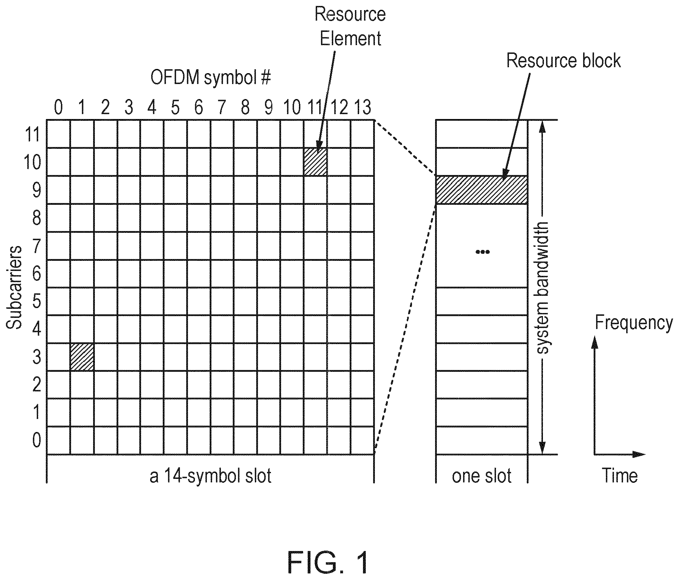

Similar to LTE, NR uses OFDM (Orthogonal Frequency Division Multiplexing) in the downlink (i.e., from a network node, gNB, eNB, or base station, to a wireless device (WD) or user equipment or UE). The basic NR physical resource over an antenna port can thus be seen as a time-frequency grid as illustrated in FIG. 1 for example, where a resource block in a 14-symbol slot is shown. A resource block corresponds to 12 contiguous subcarriers in the frequency domain. Resource blocks are numbered in the frequency domain, starting with 0 from one end of the system bandwidth. Each resource element corresponds to one OFDM subcarrier during one OFDM symbol interval.

Different subcarrier spacing values are supported in NR. The supported subcarrier spacing values (also referred to as different numerologies) are given by $\Delta f = (15 \times 2^\alpha)$ kHz where $\alpha \in (0,1,2,3,4)$. $\Delta f = 15$ kHz is the basic (or reference) subcarrier spacing that is also used in LTE.

In the time domain, downlink (DL) and uplink (UL) transmissions in NR may be organized into equally sized subframes of 1 millisecond (ms) each, similar to LTE. A subframe is further divided into multiple slots of equal duration. The slot length for subcarrier spacing $\Delta f = (15 \times 2^\alpha)$ kHz is $1/2^\alpha$ ms. There is only one slot per subframe at $\Delta f = 15$ kHz and a slot includes 14 OFDM symbols.

Downlink transmissions are dynamically scheduled, i.e., in each slot the gNB transmits downlink control information (DCI) about which WD data is to be transmitted to and which resource blocks in the current downlink slot the data is transmitted on. This control information is typically transmitted in the first one or two OFDM symbols in each slot in NR. The control information is carried on the Physical Control Channel (PDCCH) and data is carried on the Physical Downlink Shared Channel (PDSCH). A WD first detects and decodes PDCCH and if a PDCCH is decoded successfully, it then decodes the corresponding PDSCH based on the decoded control information in the PDCCH.

In addition to PDCCH and PDSCH, there are also other channels and reference signals transmitted in the downlink.

Uplink data transmissions, carried on Physical Uplink Shared Channel (PUSCH), are also dynamically scheduled by the gNB by transmitting a DCI. In case of time division duplex (TDD) operation, the DCI (which is transmitted in the DL region) always indicates a scheduling offset so that the PUSCH is transmitted in a slot in the UL region.

*Codebook-based precoding*

Multi-antenna techniques can significantly increase the data rates and reliability of a wireless communication system. The performance is in particular improved if both the transmitter and the receiver are equipped with multiple antennas, which results in a multiple-input multiple-output (MIMO) communication channel. Such systems and/or related techniques are commonly referred to as MIMO.

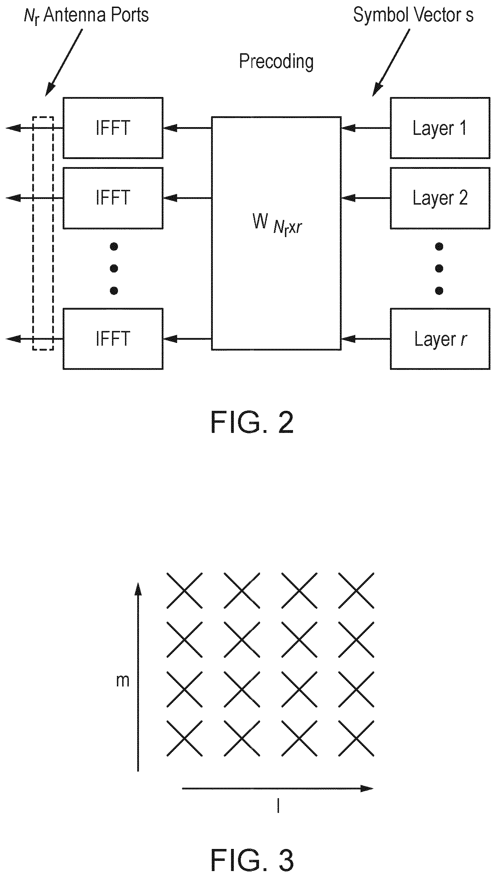

The NR standard is currently evolving with enhanced MIMO support. A component in NR is the support of MIMO antenna deployments and MIMO related techniques such as spatial multiplexing. The spatial multiplexing mode aims to provide high data rates in favorable channel conditions. An illustration of a spatial multiplexing operation is provided in FIG. 2.

As seen, the information carrying symbol vector s is multiplied by an $N_T$ x $r$ precoder matrix $\mathbf{W}$, which serves to distribute the transmit energy in a subspace of the $N_T$ (corresponding to $N_T$ antenna ports) dimensional vector space. The precoder matrix is typically selected from a codebook of possible precoder matrices, and typically indicated by means of a *precoder matrix indicator* (PMI), which specifies a unique precoder matrix in the codebook for a given number of symbol streams. The $r$ symbols in s each correspond to a layer and $r$ is referred to as the transmission rank. In this way, spatial multiplexing is achieved since multiple symbols can be transmitted simultaneously over the same time/frequency resource element (TFRE). The number of symbols $r$ is typically adapted to suit the current channel properties.

NR uses OFDM in the downlink (and DFT precoded OFDM in the uplink) and hence the received $N_R$ x 1 vector $\mathbf{y}_n$

for a certain TFRE on subcarrier $n$ (or alternatively data TFRE number $n$) is thus modeled by

$$y_n = H_n W s_n + e_n$$

where $e_n$ is a noise/interference vector obtained as realizations of a random process. The precoder $W$ can be a wideband precoder, which is constant over frequency, or frequency selective.

The precoder matrix $W$ is often chosen to match the characteristics of the $N_R \times N_T$ MIMO channel matrix $H_n$, resulting in so-called channel dependent precoding. This is also commonly referred to as closed-loop precoding and essentially strives for focusing the transmit energy into a subspace which is strong in the sense of conveying much of the transmitted energy to the WD.

In closed-loop precoding for the NR downlink, the WD transmits, based on channel measurements in the forward link (downlink), recommendations to the network node, e.g., gNB, of a suitable precoder to use. The network node, e.g., gNB, configures the WD to provide feedback according to *CSI-ReportConfig* and may transmit CSI-RS and configure the WD to use measurements of CSI-RS to feedback recommended precoding matrices that the WD selects from a codebook. A single precoder that is supposed to cover a large bandwidth (wideband precoding) may be fed back. It may also be beneficial to match the frequency variations of the channel and instead feed back a frequency-selective precoding report, e.g. several precoders, one per subband. This is an example of the more general case of channel state information (CSI) feedback, which also encompasses feeding back other information than recommended precoders to assist the network node in subsequent transmissions to the WD. Such other information may include channel quality indicators (CQIs) as well as transmission rank indicator (RI). In NR, CSI feedback can be either wideband, where one CSI is reported for the entire channel bandwidth, or frequency-selective, where one CSI is reported for each subband, which is defined as a number of contiguous resource blocks ranging between 4-32 physical resource blocks (PRBs) depending on the band width part (BWP) size.

Given the CSI feedback from the WD, the network node, e.g., gNB, determines the transmission parameters it wishes to use to transmit to the WD, including the precoding matrix, transmission rank, and modulation and coding scheme (MCS). These transmission parameters may differ from the recommendations the WD makes. The transmission rank, and thus the number of spatially multiplexed layers, is reflected in the number of columns of the precoder $W$. For efficient performance, it is important that a transmission rank that matches the channel properties is selected.

*2D Antenna arrays*

Some embodiments presented in this disclosure may be used with two-dimensional antenna arrays and some of the presented embodiments use such antennas. Such antenna arrays may be (partly) described by the number of antenna columns corresponding to the horizontal dimension N_h, the number of antenna rows corresponding to the vertical dimension N_v and the number of dimensions corresponding to different polarizations N_p. The total number of antennas is thus N=N_h N_v N_p. It should be pointed out that the concept of an antenna is non-limiting in the sense that it can refer to any virtualization (e.g., linear mapping) of the physical antenna elements. For example, pairs of physical subelements could be fed the same signal, and hence share the same virtualized antenna port. An example of a 4x4 array with cross-polarized antenna elements is illustrated in FIG. 3.

Precoding may be interpreted as multiplying the signal with different beamforming weights for each antenna prior to transmission. A typical approach is to tailor the precoder to the antenna form factor, i.e., taking into account N_h, N_v and N_p when designing the precoder codebook.

*Channel State Information Reference Signals (CSI-RS)*

For CSI measurement and feedback, CSI-RS are defined. A CSI-RS is transmitted on each transmit antenna (or antenna port) and is used by a WD to measure downlink channel between each of the transmit antenna ports and each of its receive antenna ports. The antenna ports are also referred to as CSI-RS ports. The supported number of antenna ports in NR are {1, 2, 4, 8, 12, 16, 24, 32}. By measuring the received CSI-RS, a WD can estimate the channel that the CSI-RS is traversing, including the radio propagation channel and antenna gains. The CSI-RS for the above purpose is also referred to as Non-Zero Power (NZP) CSI-RS.

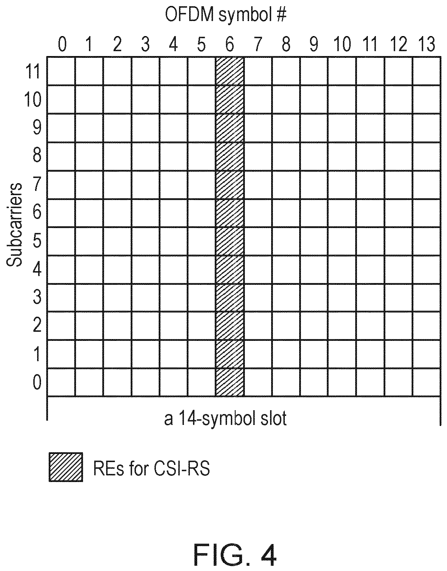

CSI-RS can be configured to be transmitted in certain resource elements (REs) in a slot and certain slots. FIG. 4 shows an example of CSI-RS REs for 12 antenna ports, where 1 RE per resource block (RB) per port is shown.

An antenna port is equivalent to a reference signal resource that the WD shall use to measure the channel. Hence, a network node, e.g., gNB, with two antennas could define two CSI-RS ports, where each port is a set of resource elements in the time frequency grid within a subframe or slot. The base station transmits each of these two reference signals from each of the two antennas so that the WD can measure the two radio channels and report channel state information back to the base station based on these measurements.

The sequence used for CSI-RS may be defined by

$$r(m) = \frac{1}{\sqrt{2}}(1 - 2 \cdot c(2m)) + j\frac{1}{\sqrt{2}}(1 - 2 \cdot c(2m+1))$$

where the pseudo-random sequence is defined, for example, in clause 5.2.1 of 3GPP Technical Specification (TS) 38.211. The pseudo-random sequence generator may be initialized with $c_{\text{init}} = \left(2^{10}\left(N_{\text{symb}}^{\text{slot}} n_{\text{s,f}}^{\mu} + l + 1\right)(2n_{\text{ID}} + 1) + n_{\text{ID}}\right)\text{mod}2^{31}$ at the start of each OFDM symbol where $n_{\text{s,f}}^{\mu}$ is the slot number within a radio frame, $l$ is the OFDM symbol number within a slot, and $n_{\text{ID}}$ equals the higher-layer parameter s*cramblingID* or *sequenceGenerationConfig*.

There are 18 different CSI-RS resource configurations in NR, where each has a specific number of ports X. See Table 1 below. The index k_i indicates which first subcarrier in the PRB that is used for mapping the CSI-RS sequence to resource elements, where the second subcarrier is k_i+1. This set (k_i, k_i+1) of subcarriers are denoted as a code division multiplexing (CDM) group for that particular OFDM symbol, where index i may be interpreted as the CDM group index. The index l_i indicates the OFDM symbol within the slot. Hence, for example the configuration given by row 4 is a X=4 port CSI-RS resource where two CDM groups are used, first starting at subcarrier k_0 and the second starting at subcarrier k_0+2 (=k_1), both in the same OFDM symbol l_0. (Note that k_i and l_i are parameters signalled from gNB to WD by radio resource control (RRC) signalling when configuring the CSI-RS resource).

Moreover, CSI-RS ports are numbered within a CDM group first and then across CDM groups. So, in this example, CSI-RS port 0 and 1 maps to the CDM group indicated by k_0 and port 2 and 3 maps to the CDM group indicated by k_0+2.

This is captured in the 3GPP specifications in which the CSI-RS port indices p are numbered as,

$$p = 3000 + s + jL;$$

$$j = 0,1,...,N/L - 1$$

$$s = 0,1,...,L - 1;$$

where s is the sequence index provided by Tables 7.4.1.5.3-2 to 7.4.1.5.3-5, below $L \in \{1,2,4,8\}$ is the CDM group size, and N is the number of CSI-RS ports. The CDM group index j given in Table 1 and corresponds to the time/frequency locations $(\bar{k},\bar{l})$ for a given row of the table. The CDM groups are numbered in order of increasing frequency domain allocation first and then increasing time domain allocation.

For some rows, more than two CDM groups are used and they can be individually mapped to subcarriers, an example is row 10 where three CDM group indices k_0, k_1 and k_2 are used in one and the same symbol given by the RRC configured parameter l_0.

A CDM group can refer to a set of 2, 4 or 8 antenna ports, where the set of 2 antenna ports occurs when only CDM in frequency-domain (FD-CDM) over two adjacent subcarriers is considered.

Table 1. CSI-RS locations within a slot.

| Row | Ports $X$ | Density $\rho$ | cdm-Type | $(\bar{k},\bar{l})$ | CDM group index $j$ | $k'$ | $l'$ |
|---|---|---|---|---|---|---|---|
| 1 | 1 | 3 | No CDM | $(k_0, l_0)$, $(k_0 + 4, l_0)$, $(k_0 + 8, l_0)$ | 0,0,0 | 0 | 0 |
| 2 | 1 | 1, 0.5 | No CDM | $(k_0, l_0)$, | 0 | 0 | 0 |
| 3 | 2 | 1, 0.5 | FD-CDM2 | $(k_0, l_0)$, | 0 | 0, 1 | 0 |
| 4 | 4 | 1 | FD-CDM2 | $(k_0, l_0)$, $(k_0 + 2, l_0)$ | 0,1 | 0, 1 | 0 |
| 5 | 4 | 1 | FD-CDM2 | $(k_0, l_0)$, $(k_0, l_0 + 1)$ | 0,1 | 0, 1 | 0 |
| 6 | 8 | 1 | FD-CDM2 | $(k_0, l_0)$, $(k_1, l_0)$, $(k_2, l_0)$, $(k_3, l_0)$ | 0,1,2,3 | 0, 1 | 0 |
| 7 | 8 | 1 | FD-CDM2 | $(k_0, l_0)$, $(k_1, l_0)$, $(k_0, l_0 + 1)$, $(k_1, l_0 + 1)$ | 0,1,2,3 | 0, 1 | 0 |

(continued)

| Row | Ports $X$ | Density $\rho$ | cdm-Type | $(\bar{k},\bar{l})$ | CDM group index $j$ | $k'$ | $l'$ |
|---|---|---|---|---|---|---|---|
| 8 | 8 | 1 | CDM4 (FD2,TD2) | $(k_0, l_0), (k_1, l_0)$ | 0,1 | 0, 1 | 0, 1 |
| 9 | 12 | 1 | FD-CDM2 | $(k_0, l_0), (k_1, l_0), (k_2, l_0), (k_3, l_0), (k_4, l_0), (k_5, l_0)$ | 0,1,2,3,4,5 | 0, 1 | 0 |
| 10 | 12 | 1 | CDM4 (FD2,TD2) | $(k_0, l_0), (k_1, l_0), (k_2, l_0)$ | 0,1,2 | 0, 1 | 0, 1 |
| 11 | 16 | 1, 0.5 | FD-CDM2 | $(k_0, l_0), (k_1, l_0), (k_2, l_0),$ $(k_3, l_0), (k_0, l_0 + 1), (k_1, l_0 + 1), (k_2, l_0 + 1), (k_3, l_0 + 1)$ | 0,1,2,3, 4,5,6,7 | 0, 1 | 0 |
| 12 | 16 | 1, 0.5 | CDM4 (FD2,TD2) | $(k_0, l_0), (k_1, l_0), (k_2, l_0), (k_3, l_0)$ | 0,1,2,3 | 0, 1 | 0, 1 |
| 13 | 24 | 1, 0.5 | FD-CDM2 | $(k_0, l_0), (k_1, l_0), (k_2, l_0), (k_0, l_0 + 1),$ $(k_1, l_0 + 1), (k_2, l_0 + 1),(k_0, l_1), (k_1, l_1), (k_2, l_1), (k_0, l_1 + 1), (k_1, l_1 + 1), (k_2, l_1 + 1)$ | 0,1,2,3,4,5, 6,7,8,9,10,11 | 0, 1 | 0 |
| 14 | 24 | 1, 0.5 | CDM4 (FD2,TD2) | $(k_0, l_0), (k_1, l_0), (k_2, l_0), (k_0, l_1), (k_1, l_1), (k_2, l_1)$ | 0,1,2,3,4,5 | 0, 1 | 0, 1 |
| 15 | 24 | 1, 0.5 | CDM8 (FD2,TD4) | $(k_0, l_0), (k_1, l_0), (k_2, l_0)$ | 0,1,2 | 0, 1 | 0, 1, 2, 3 |
| 16 | 32 | 1, 0.5 | FD-CDM2 | $(k_0, l_0), (k_1, l_0), (k_2, l_0), (k_3, l_0),(k_0, l_0 + 1), (k_1, l_0 + 1), (k_2, l_0 + 1), (k_3, l_0 + 1), (k_0, l_1), (k_1, l_1), (k_2, l_1), (k_3, l_1), (k_0, l_1 + 1), (k_1, l_1 + 1), (k_2, l_1 + 1), (k_3, l_1 + 1)$ | 0,1,2,3, 4,5,6,7, 8,9,10,11, 12,13,14,15 | 0, 1 | 0 |
| 17 | 32 | 1, 0.5 | CDM4 (FD2,TD2) | $(k_0, l_0), (k_1, l_0), (k_2, l_0), (k_3, l_0), (k_0, l_1), (k_1, l_1), (k_2, l_1), (k_3, l_1)$ | 0,1,2,3,4,5,6,7 | 0, 1 | 0, 1 |
| 18 | 32 | 1, 0.5 | CDM8 (FD2,TD4) | $(k_0, l_0), (k_1, l_0), (k_2, l_0), (k_3, l_0)$ | 0,1,2,3 | 0,1 | 0,1, 2, 3 |

In more strict mathematical terminology, the mapping of the sequence $r(m)$ onto resource-elements $a_{k,l}^{(p,\mu)}$ for CSI-RS antenna port p can be described by:

$$a_{k,l}^{(p,\mu)} = \beta_{\text{CSIRS}} w_{\text{f}}(k') \cdot w_{\text{t}}(l') \cdot r_{l,n_{\text{s,f}}}(m')$$

$$m' = \lfloor n\alpha \rfloor + k' + \left\lfloor \frac{\bar{k}\rho}{N_{\text{sc}}^{\text{RB}}} \right\rfloor$$

$$k = nN_{\text{sc}}^{\text{RB}} + \bar{k} + k'$$

$$l = \bar{l} + l'$$

$$\alpha = \begin{cases} \rho & \text{for } X = 1 \\ 2\rho & \text{for } X > 1 \end{cases}$$

$$n = 0, 1, \ldots$$

For the different CDM types, the following CDM weights are used, where $w(k', l') = w_f(k') \cdot w_t(l')$ corresponds to the resulting CDM weights formed by the multiplication of the frequency and time-domain CDM weight.

Table 7.4.1.5.3-2: The sequences $w_f(k')$ and $w_t(l')$ for *cdm-Type* equal to 'no CDM'.

| Index | $w_f(0)$ | $w_t(0)$ |
|---|---|---|
| 0 | 1 | 1 |

Table 7.4.1.5.3-3: The sequences $w_f(k')$ and $w_t(l')$ for *cdm-Type* equal to 'FD-CDM2'.

| Index | $[w_f(0)\ w_f(1)]$ | $w_t(0)$ |
|---|---|---|
| 0 | [+1 +1] | 1 |
| 1 | [+1 -1] | 1 |

Table 7.4.1.5.3-4: The sequences $w_f(k')$ and $w_t(l')$ for *cdm-Type* equal to 'CDM4'.

| Index | $[w_f(0)\ w_f(1)]$ | $[w_t(0)\ w_t(1)]$ |
|---|---|---|
| 0 | [+1 +1] | [+1 +1] |
| 1 | [+1 -1] | [+1 +1] |
| 2 | [+1 +1] | [+1 -1] |
| 3 | [+1 -1] | [+1 -1] |

Table 7.4.1.5.3-5: The sequences $w_f(k')$ and $w_t(l')$ for *cdm-Type* equal to 'CDM8'.

| Index | $[w_f(0)\ w_f(1)]$ | $[w_t(0)\ w_t(1)\ w_t(2)\ w_t(3)]$ |
|---|---|---|
| 0 | [+1 +1] | [+1 +1 +1 +1] |
| 1 | [+1 -1] | [+1 +1 +1 +1] |
| 2 | [+1 +1] | [+1 -1 +1 -1] |
| 3 | [+1 -1] | [+1 -1 +1 -1] |
| 4 | [+1 +1] | [+1 +1 -1 -1] |
| 5 | [+1 -1] | [+1 +1 -1 -1] |
| 6 | [+1 +1] | [+1 -1 -1 +1] |
| 7 | [+1 -1] | [+1 -1 -1 +1] |

*DFT-based precoders*

A common type of precoding uses a Discrete Fourier Transform (DFT)-precoder, where the precoder vector used to precode a single-layer transmission using a single-polarized uniform linear array (ULA) with *N* antennas is defined as

$$\boldsymbol{w}_{1D}(k) = \frac{1}{\sqrt{N}} \begin{bmatrix} e^{j2\pi \cdot 0 \cdot \frac{k}{QN}} \\ e^{j2\pi \cdot 1 \cdot \frac{k}{QN}} \\ \vdots \\ e^{j2\pi \cdot (N-1) \cdot \frac{k}{QN}} \end{bmatrix},$$

where $k = 0, 1, \ldots QN - 1$ is the precoder index and $Q$ is an integer oversampling factor. A corresponding precoder vector for a two-dimensional uniform planar array (UPA) can be created by taking the Kronecker product of two precoder vectors as $\boldsymbol{w}_{2D}(k, l) = \boldsymbol{w}_{1D}(k) \otimes \boldsymbol{w}_{1D}(l)$. Extending the precoder for a dual-polarized user positioning accuracy (UPA) may then be

performed as

$$w_{2D,DP}(k,l,\phi) = \begin{bmatrix} 1 \\ e^{j\phi} \end{bmatrix} \otimes w_{2D}(k,l) = \begin{bmatrix} w_{2D}(k,l) \\ e^{j\phi}w_{2D}(k,l) \end{bmatrix} = \begin{bmatrix} w_{2D}(k,l) & 0 \\ 0 & w_{2D}(k,l) \end{bmatrix}\begin{bmatrix} 1 \\ e^{j\phi} \end{bmatrix}$$ , where $e^{j\phi}$

is a co-phasing factor that may for instance be selected from quadrature phase shift keying (QPSK) alphabet $\phi \in \{0, \frac{\pi}{2}, \pi, \frac{3\pi}{2}\}$.

A precoder matrix $W_{2D,DP}$ for multi-layer transmission may be created by appending columns of DFT precoder vectors as

$W_{2D,DP} = [w_{2D,DP}(k_1, l_1, \phi_1)\ w_{2D,DP}(k_2, l_2, \phi_2) \cdots w_{2D,DP}(k_R, l_R, \phi_R)]$, where R is the number of transmission layers, i.e., the transmission rank. In a common special case for a rank-2 DFT precoder, $k_1 = k_2 = k$ and $l_1 = l_2 = l$, meaning that

$$W_{2D,DP} = [w_{2D,DP}(k, l, \phi_1)\quad w_{2D,DP}(k, l, \phi_2)] = \begin{bmatrix} w_{2D}(k,l) & 0 \\ 0 & w_{2D}(k,l) \end{bmatrix}\begin{bmatrix} 1 & 1 \\ e^{j\phi_1} & e^{j\phi_2} \end{bmatrix}.$$

Such DFT-based precoders are used for instance in NR Type I CSI feedback. The NR codebook thus assumes an antenna port indexing which maps ports first along the second dimension (identified by the index l, which may be the vertical dimension), then the first dimension (identified by the index k, which may be the horizontal dimension), and then the polarization dimension.

*CSI framework in NR*

In NR, a WD can be configured with multiple CSI report settings and multiple CSI-RS resource settings. Each resource setting can contain multiple resource sets, and each resource set can contain up to 8 CSI-RS resources. For each CSI report setting, a WD feeds back a CSI report, either periodically or aperiodically (triggered by the network).

Each CSI report may contain at least:

- A CSI-RS resource set for channel measurement;
- An IMR resource set for interference measurement;
- Optionally, a CSI-RS resource set for interference measurement;
- Time-domain behavior, i.e. periodic, semi-persistent, or aperiodic reporting
- Frequency granularity, i.e. wideband or subband;
- CSI parameters to be reported such as RI, PMI, CQI, and CSI-RS resource indicator (CRI) in case of multiple CSI-RS resources in a resource set;
- Codebook types, i.e. type I or II, and eventual codebook subset restriction
- Measurement restriction enabled or disabled; and
- Subband size. One out of two possible subband sizes is indicated, the value range for a subband size depends on the configured bandwidth of the downlink bandwidth part (BWP). One CQI/PMI (if configured for subband reporting) is fed back per subband.

When the CSI-RS resource set in a CSI report setting includes multiple CSI-RS resources, one of the CSI-RS resources is selected by a WD and a CSI-RS resource indicator (CRI) is also reported by the WD to indicate to the gNB about the selected CSI-RS resource in the resource set, together with RI, PMI and CQI associated with the selected CSI-RS resource. The network may then transmit the different CSI-RS resources using different MIMO precoders or by using different beam directions.

For aperiodic CSI reporting in NR, more than one CSI report settings, each with a different CSI-RS resource set for channel measurement and/or different resource set for interference measurement can be configured and triggered at the same time, i.e., with a single trigger command in the downlink control channel from the gNB to the WD. In this case, multiple CSI reports are measured, computed, aggregated and sent from the WD to the gNB in a single physical uplink shared channel (PUSCH) message.

As a general classification, NR categorizes a CSI Report Setting into wideband and subband frequency-granularity as follows:

- wideband PMI/CQI reporting, beam reporting, hybrid CSI report, semi-open loop reporting and non-PMI feedback (with wideband CQI) is classified as wideband frequency-granularity CSI, whereas;

- the other configurations of a CSI Report Setting are classified as having a subband frequency-granularity.

Only CSI Report Settings with wideband frequency-granularity are allowed to be periodically reported on short PUCCH.

*CSI-RS interference issue*

From over-the-air (OTA) testing of commercial NR WDs, an issue has been found related to MIMO performance near the cell edge. The issue has been detected for both 32 and 8 port CSI-RS and for two WDs with chipsets from different vendors.

This is a real-life network issue related to MIMO which may severely impact NR performance and may be summarized as:

- Near cell edge, while still connected to a serving cell, the NR WD selects a precoding matrix indicator (PMI) as if it was served by an interfering cell, hence false PMI selection and reporting.

  ○ This leads to a sharp drop in physical downlink shared channel (PDSCH) throughput at cell edge.
  ○ PMI selection logged at the WD, hence this issue is not due to poor uplink control (UCI) feedback channel quality.

- The problem may occur whenever a CSI-RS resource from the serving cell collides with a CSI-RS resource from a neighboring cell.

  ○ The problem may occur even though a different seed is used for CSI-RS sequence generation in serving and interfering cell respectively.
  ○ Even if non-colliding CSI-RS is configured by the use of CSI-RS cell planning, colliding CSI-RS between different cells may be very hard to avoid in practical networks even if frequency reuse is adopted because the topology is much different from hexagonal and far away gNB with colliding CSI-RS still hits the WD.

- One cause of the problem is due to the design in 3GPP Release 15 (Rel 15) that the same CSI-RS sequence is used for all CSI-RS ports in the CSI-RS resource.

  ○ To mitigate this, the WD may perform more advanced channel estimation, which may be unnecessarily complex and may be avoided if the problem with the CSI-RS design is mitigated.

*Simplified mathematical analysis of CSI-RS interference*

To simplify the analysis and to better understand the underlying reasons for the false PMI selection, it may be assumed in this theoretical analysis that orthogonal cover code (OCC) is not used to separate pairs of ports. In the next section, simulations were made using the true NR CSI-RS with both FD-OCC and TD-OCC to illustrate that the problem exists also in this case as was observed in OTA.

Start with assuming CSI-RS ports in one resource block where each CSI-RS port uses one RE. Assume the WD is connected to a desired cell A and experiences downlink interference from cell B. The CSI-RS sequence sample on subcarrier *k* for port *p* is $s_p^A(k)$ and $s_p^B(k)$ for the two cells, respectively.

In addition, the channels are $h_p^A$ and $h_p^B$ from cell A and B, respectively, (assuming the channel is flat in frequency and noise is negligible) overlapping CSI-RS and the received signal is then, for port *p*

$$y_p(k) = s_p^A(k)h_p^A + \gamma s_p^B(k)h_p^B$$

where $\gamma$ is square root of the power offset of the interferer versus the desired signal, i.e., the inverse of the SIR. The channel estimate of channel $h_p^A$ is then, if averaging the channel estimate across *K* samples in frequency domain within an OFDM symbol (assuming the value K is sufficiently small so that the channel is flat across these samples):

$$\widehat{h_p^A} = \frac{1}{K}\sum_{k=1}^{K}\left(s_p^A(k)\right)^* y_p(k) = h_p^A + \frac{\gamma}{K}\sum_{k=1}^{K}\left(s_p^A(k)\right)^* s_p^B(k)h_p^B = h_p^A +$$

$$\beta_p^K h_p^B$$

where the attenuated cross-sequence term between cell A and B, is,

$$\beta_p^K = \frac{\gamma}{K}\sum_{k=1}^{K}\left(s_p^A(k)\right)^* s_p^B(k)$$

Now, stack all channel estimates the WD makes from the $N$ CSI-RS ports transmitted from the serving cell, cell A, into a column vector:

$$\widehat{\boldsymbol{h}} = \begin{bmatrix} \widehat{h_1^A} & ... & \widehat{h_N^A} \end{bmatrix}^T = [h_1^A & ... & h_N^A]^T + [\beta_1^K h_1^B & \beta_2^K h_2^B ... & \beta_N^K h_N^B]^T = \boldsymbol{h} + \boldsymbol{e.}$$

To reflect a design choice in NR in this modeling, assume _that the same sequence_ $s_p^A(k)$ is used for all CSI-RS ports of a CSI-RS resource, hence $s_p^A(k) = s^A(k)$, and $\beta_p^K = \beta^K$ and we can write:

$$\widehat{\boldsymbol{h}} = \begin{bmatrix} \widehat{h_1^A} & ... & \widehat{h_N^A} \end{bmatrix}^T = [h_1^A & ... & h_N^A]^T + \beta^K [h_1^B & h_2^B ... & h_N^B]^T = \boldsymbol{h}^A + \beta^K \boldsymbol{h}^B.$$

To proceed, interest is in the outer product $\boldsymbol{R}_{\hat{h}\hat{h}}$ as it is well known with respect to optimization of norms and thus likely used in the PMI determination:

$$\widehat{\boldsymbol{h}}\widehat{\boldsymbol{h}}^H = \boldsymbol{h}^A(\boldsymbol{h}^A)^H + |\beta^K|^2\boldsymbol{h}^B(\boldsymbol{h}^B)^H + 2Re\{\beta^K\boldsymbol{h}^A(\boldsymbol{h}^B)^H\}.$$

The first term is due to the desired channel and the second term is due to the channel from the interfering cell B. The contribution from interfering cell is attenuated with the factor $|\beta^K|^2$ and behaves in the limit as $|\beta^K|^2 \xrightarrow{K\to\infty} 0$ since pseudo-orthogonal sequences are used in cell A and B.

The third term vanishes if an accumulation of outer products is performed, since each $\beta^K$ is random per RB and the accumulation tends towards zero. Such accumulation typically is done when estimating the spatial covariance $\boldsymbol{R}_{\hat{h}\hat{h}}$, since $\hat{h}\hat{h}^H$ is estimated per RB and $\boldsymbol{R}_{\hat{h}\hat{h}}$ is obtained by averaging the outer product over many RBs.

Now, if raw sample estimate for CSI-RS port channel estimation is used, then $K = 1$ and $|\beta^1|^2 = \gamma^2$ and

$$\widehat{\boldsymbol{h}}\widehat{\boldsymbol{h}}^H = \boldsymbol{h}^A(\boldsymbol{h}^A)^H + \gamma^2\boldsymbol{h}^B(\boldsymbol{h}^B)^H + 2Re\{\beta^1\boldsymbol{h}^A(\boldsymbol{h}^B)^H\} \quad (2).$$

Using the result that if the outer product $\hat{h}\hat{h}^H$ is averaged over many RBs then the third term tends to zero, leaving the received spatial covariance converging towards this expression where the interference channel covariance is present:

$$\boldsymbol{R}_{\hat{h}\hat{h}} \sim \boldsymbol{h}^A(\boldsymbol{h}^A)^H + \gamma^2\boldsymbol{h}^B(\boldsymbol{h}^B)^H .$$

A more advanced WD may use some frequency domain processing to reduce the error $\boldsymbol{e}$ and remove some of the structure of the interference analyzed below. On the other hand, for large CSI-RS resources, such as 32 ports, it is more demanding from WD complexity perspective to perform this processing, while it may be more likely for smaller number of ports. Also, it may be difficult to perform such frequency domain processing in frequency selective channels.

Note also in equation (2) that the two first terms do not depend on the subcarrier $k$ as there is no dependence on the factor $\beta^K$.

From this expression (2) it can be seen that, for low and negative signal-to-interference (SIR), where $\gamma^2 \geq 1$, the principal eigenvector of $\hat{h}\hat{h}^H$ is dominated or strongly affected by the principal eigenvector of $\boldsymbol{R}_{ee} \sim \boldsymbol{h}^B(\boldsymbol{h}^B)^H$, which is exactly the outer product of the channel of interfering non-serving cell B. The interference is not spatially white, but has a strong colored structure. Hence,

$$\widehat{\boldsymbol{w}} =$$

$$\arg\max_{\boldsymbol{w}}(\boldsymbol{w}^*\boldsymbol{R}_{\widehat{h}\widehat{h}}\boldsymbol{w}) \sim \arg\max_{\boldsymbol{w}}(\boldsymbol{w}^*\boldsymbol{R}_{ee}\boldsymbol{w}) = \arg\max_{\boldsymbol{w}}(\boldsymbol{w}^*\boldsymbol{h}^B(\boldsymbol{h}^B)^H\boldsymbol{w})$$

for

$$\gamma^2 \geq 1.,$$

The consequence is that the selection of $\widehat{\boldsymbol{w}}$ will, if the signal-to-interference-plus-noise ratio (SINR) is sufficiently low, start to follow the CSI-RS transmitted from the strongest interfering (non-serving) cell instead of the serving cell, <u>even if a different scrambling sequence</u> is used if raw channel estimates are used in the channel estimation *(K=1)*.

If the channel estimation suppresses the interfering cell by selecting a $K$ value larger than one, then the problem may be reduced as $|\beta^K|^2$ may be significantly lower.

The root cause of the problem is thus the use of the same sequence of all $p$ ports: $s_p^A(k) = s^A(k)$. If the specification is changed, for example so that each port has its own sequence, then

$$\widehat{\boldsymbol{h}}\widehat{\boldsymbol{h}}^H \sim \boldsymbol{h}^A(\boldsymbol{h}^A)^H +$$

$$[\beta_1^K h_1^B \quad \beta_2^K h_2^B \quad \dots \quad \beta_N^K h_N^B]^T [\beta_1^K h_1^B \quad \beta_2^K h_2^B \quad \dots \quad \beta_N^K h_N^B]^* \quad (3).$$

Note that even if raw channel estimates are used, $K$=1, each $\beta_p^1$ is a pseudo-random QPSK symbol, this "destroys" the property of $\boldsymbol{h}^B(\boldsymbol{h}^B)^H$ as each element is "scrambled" and appears closer to "spatially white" compared to the Rel 15 design, which makes the interference spatially colored. The expression (3) cannot be reduced to (2) in this case since the interference term now lies in a subspace that varies randomly from one subcarrier $k$ to another; thus, spreading the interference energy rather isotropically in the entire vector space.

Hence, the principal eigenvector for $[\beta_1^K h_1^B \quad \beta_2^K h_2^B \quad \dots \quad \beta_N^K h_N^B]^T [\beta_1^K h_1^B \quad \beta_2^K h_2^B \quad \dots \quad \beta_N^K h_N^B]^*$ which appears as the interference term in (3) is unrelated to the principal eigenvector of $\boldsymbol{h}^B(\boldsymbol{h}^B)^H$ which is very present in (2).

Documents WO 2020/058743 A1 and HUAWEI:"Inter-cell CSI-RS Analysis", 3GPP DRAFT; R1-100248 provide background methods of randomizing inter-cell CSI-RS interference.

## SUMMARY

The invention is defined in the appended claims. Some embodiments advantageously provide methods, systems, and apparatuses for partially overlapped channel state information reference signal (CSI-RS) shifting.

In some embodiments, a method implemented in a network node includes configuring a channel state information reference signal (CSI-RS) resource of a set of candidate CSI-RS resources, the CSI-RS resource partially overlapping at least one other CSI-RS resource in the set; and optionally, transmitting CSI-RS signalling on the configured CSI-RS resource.

In some embodiments, a method implemented in a wireless device (WD) includes receiving a configuration of a channel state information reference signal (CSI-RS) resource of a set of candidate CSI-RS resources, the CSI-RS resource partially overlapping at least one other CSI-RS resource in the set; and optionally, receiving CSI-RS signalling on the configured CSI-RS resource.

According to an aspect of the present disclosure, a method implemented in a network node configured to communicate with a wireless device, WD, is provided. The method comprises configuring a first channel state information reference signal, CSI-RS, resource in a set of candidate CSI-RS resources, the first CSI-RS resource partially overlapping a second CSI-RS resource in the set of candidate CSI-RS resources, the first CSI-RS resource being associated with a first cell and the second CSI-RS resource being associated with a second cell; and transmitting CSI-RS signaling on the configured first CSI-RS resource.

In some embodiments, the first CSI-RS resource partially overlaps the second CSI-RS resource in at least one time-frequency resource within a slot. In some embodiments, each CSI-RS resource in the set of candidate CSI-RS resources occupies a set of time-frequency resource elements, REs, within a slot and a subset of resource elements of the first CSI-RS resource are occupied by a subset of resource elements of the second CSI-RS resource. In some embodiments, the first cell is a serving cell and the second cell is a neighboring cell. In some embodiments, each candidate CSI-RS resource in the set of candidate CSI-RS resources partially overlaps each of the other candidate CSI-RS resources in the set within a slot.

In some embodiments, the method further includes allocating a resource position for the first CSI-RS resource based on a physical cell ID, PCI, associated with the first cell. In some embodiments, allocating comprises allocating the resource position for the first CSI-RS resource based on the PCI modulus N, N being a number of resource positions for CSI-RS resources in the set of candidate CSI-RS resources. In some embodiments, the second CSI-RS resource is based on a PCI associated with the second cell. In some embodiments, the candidate CSI-RS resources in the set are shifted relative to each other within a slot based on an index value. In some embodiments, the first cell has a corresponding first index value and the second cell has a corresponding second index value, the second index value being different from the first index value. According to the invention, the method further comprises applying a modulation and coding scheme, MCS, backoff in a slot on which the CSI-RS signaling is transmitted.

According to another aspect of the present disclosure, a network node configured to communicate with a wireless device, WD, is provided. The network node comprises processing circuitry. The processing circuitry is configured to cause the network node to configure a first channel state information reference signal, CSI-RS, resource in a set of candidate CSI-RS resources, the first CSI-RS resource partially overlapping a second CSI-RS resource in the set of candidate CSI-RS resources, the first CSI-RS resource being associated with a first cell and the second CSI-RS resource being associated with a second cell; and transmit CSI-RS signaling on the configured first CSI-RS resource.

In some embodiments, the first CSI-RS resource partially overlaps the second CSI-RS resource in at least one time-frequency resource within a slot. In some embodiments, each CSI-RS resource in the set of candidate CSI-RS resources occupies a set of time-frequency resource elements, REs, within a slot and a subset of resource elements of the first CSI-RS resource are occupied by a subset of resource elements of the second CSI-RS resource. In some embodiments, the first cell is a serving cell and the second cell is a neighboring cell. In some embodiments, each candidate CSI-RS resource in the set of candidate CSI-RS resources partially overlaps each of the other candidate CSI-RS resources in the set within a slot. In some embodiments, the processing circuitry is configured to cause the network node to allocate a resource position for the first CSI-RS resource based on a physical cell ID, PCI, associated with the first cell.

In some embodiments, the processing circuitry is configured to cause the network node to allocate by being configured to cause the network node to allocate the resource position for the first CSI-RS resource based on the PCI modulus N, N being a number of resource positions for CSI-RS resources in the set of candidate CSI-RS resources. In some embodiments, the second CSI-RS resource is based on a PCI associated with the second cell. In some embodiments, the candidate CSI-RS resources in the set are shifted relative to each other within a slot based on an index value. In some embodiments, the first cell has a corresponding first index value and the second cell has a corresponding second index value, the second index value being different from the first index value. According to the invention, the processing circuitry is further configured to cause the network node to apply a modulation and coding scheme, MCS, backoff in a slot on which the CSI-RS signaling is transmitted.

According to yet another aspect of the present disclosure, a method implemented in a wireless device, WD, configured to communicate with a network node is provided. The method comprises receiving a configuration of a first channel state information reference signal, CSI-RS, resource in a set of candidate CSI-RS resources, the first CSI-RS resource partially overlapping a second CSI-RS resource in the set of candidate CSI-RS resources, the first CSI-RS resource being associated with a first cell and the second CSI-RS resource being associated with a second cell; and receiving CSI-RS signaling on the configured first CSI-RS resource.

In some embodiments, the first CSI-RS resource partially overlaps the second CSI-RS resource in at least one time-frequency resource within a slot. In some embodiments, each CSI-RS resource in the set of candidate CSI-RS resources occupies a set of time-frequency resource elements, REs, within a slot and a subset of resource elements of the first CSI-RS resource are occupied by a subset of resource elements of the second CSI-RS resource. In some embodiments, the first cell is a serving cell and the second cell is a neighboring cell. In some embodiments, each candidate CSI-RS resource in the set of candidate CSI-RS resources partially overlaps each of the other candidate CSI-RS resources in the set within a slot.

In some embodiments, the method further includes receiving an allocation of a resource position for the first CSI-RS resource, the resource position being based on a physical cell ID, PCI, associated with the first cell. In some embodiments, the resource position for the first CSI-RS resource is based on the PCI modulus N, N being a number of resource positions for CSI-RS resources in the set of candidate CSI-RS resources. In some embodiments, the second CSI-RS resource is based on a PCI associated with the second cell. In some embodiments, the candidate CSI-RS resources in the set are shifted relative to each other within a slot based on an index value. In some embodiments, the first cell has a corresponding first index value and the second cell has a corresponding second index value, the second index value being different from the first index value. According to the invention, the CSI-RS signaling is received according to a modulation and coding scheme, MCS, backoff.

According to yet another aspect of the present disclosure, a wireless device, WD, configured to communicate with a network node is provided. The WD comprises processing circuitry. The processing circuitry is configured to cause the WD to receive a configuration of a first channel state information reference signal, CSI-RS, resource in a set of candidate CSI-RS resources, the first CSI-RS resource partially overlapping a second CSI-RS resource in the set of candidate CSI-RS resources, the first CSI-RS resource being associated with a first cell and the second CSI-RS resource being associated with a second cell; and receive CSI-RS signaling on the configured first CSI-RS resource.

In some embodiments, the first CSI-RS resource partially overlaps the second CSI-RS resource in at least one time-frequency resource within a slot. In some embodiments, each CSI-RS resource in the set of candidate CSI-RS resources occupies a set of time-frequency resource elements, REs, within a slot and a subset of resource elements of the first CSI-RS resource are occupied by a subset of resource elements of the second CSI-RS resource. In some embodiments, the first cell is a serving cell and the second cell is a neighboring cell. In some embodiments, each candidate CSI-RS resource in the set of candidate CSI-RS resources partially overlaps each of the other candidate CSI-RS resources in the set within a slot. In some embodiments, the processing circuitry is further configured to cause the WD to receive an allocation of a resource position for the first CSI-RS resource, the resource position being based on a physical cell ID, PCI, associated with the first cell.

In some embodiments, the resource position for the first CSI-RS resource is based on the PCI modulus N, N being a number of resource positions for CSI-RS resources in the set of candidate CSI-RS resources. In some embodiments, the second CSI-RS resource is based on a PCI associated with the second cell. In some embodiments, the candidate CSI-RS resources in the set are shifted relative to each other within a slot based on an index value. In some embodiments, the first cell has a corresponding first index value and the second cell has a corresponding second index value, the second index value being different from the first index value. According to the invention, the CSI-RS signaling is received according to a modulation and coding scheme, MCS, backoff.

BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:

FIG. 1 illustrates an example of a NR physical resource grid;

FIG. 2 illustrates an example transmission structure of precoded spatial multiplexing mode in NR;

FIG. 3 illustrates an example of a two-dimensional antenna array of cross-polarized antenna elements ($N_P=2$), with $N\_h=4$ horizontal antenna elements and $N\_v=4$ vertical antenna elements;

FIG. 4 illustrates an example of RE allocation for a 12-port CSI-RS in NR;

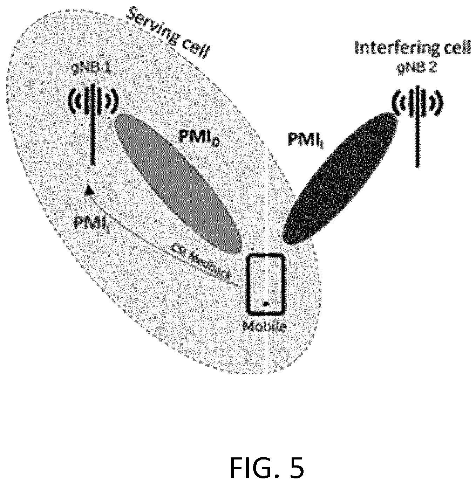

FIG. 5 illustrates an example of the observed problem from field testing with commercial WDs (the WDs served by gNB 1 are reporting $PMI_I$ instead of $PMI_D$ where $PMI_I$ is the PMI the WD would report if served by gNB 2);

FIG. 6 is a schematic diagram of an exemplary network architecture illustrating a communication system connected via an intermediate network to a host computer according to the principles in the present disclosure;

FIG. 7 is a block diagram of a host computer communicating via a network node with a wireless device over an at least partially wireless connection according to some embodiments of the present disclosure;

FIG. 8 is a flowchart illustrating exemplary methods implemented in a communication system including a host computer, a network node and a wireless device for executing a client application at a wireless device according to some embodiments of the present disclosure;

FIG. 9 is a flowchart illustrating exemplary methods implemented in a communication system including a host computer, a network node and a wireless device for receiving user data at a wireless device according to some embodiments of the present disclosure;

FIG. 10 is a flowchart illustrating exemplary methods implemented in a communication system including a host computer, a network node and a wireless device for receiving user data from the wireless device at a host computer according to some embodiments of the present disclosure;

FIG. 11 is a flowchart illustrating exemplary methods implemented in a communication system including a host computer, a network node and a wireless device for receiving user data at a host computer according to some embodiments of the present disclosure;

FIG. 12 is a flowchart of an exemplary process in a network node according to some embodiments of the present disclosure;

FIG. 13 is a flowchart of an exemplary process in a wireless device according to some embodiments of the present disclosure;

FIG. 14 is a flowchart of an exemplary process in a network node according to some embodiments of the present disclosure;

FIG. 15 is a flowchart of an exemplary process in a wireless device according to some embodiments of the present disclosure;

FIG. 16 illustrates an example of partially overlapped CSI-RS resources according to some embodiments of the present disclosure;

FIG. 17 illustrates the 32-port CSI-RS pattern configuration A according to some embodiments of the present disclosure;

FIG. 18 illustrates the 32-port CSI-RS pattern configuration B according to some embodiments of the present disclosure;

FIG. 19 illustrates the 32-port CSI-RS pattern configuration C according to some embodiments of the present disclosure;

FIG. 20 illustrates the 32-port CSI-RS pattern configuration D according to some embodiments of the present disclosure;

FIG. 21 illustrates the 32-port CSI-RS pattern configuration E according to some embodiments of the present disclosure;

FIG. 22 illustrates the 32-port CSI-RS pattern configuration F according to some embodiments of the present disclosure;

FIG. 23 illustrates an example of serving and interfering cell CSI-RS resource positions within a CSI-RS reuse group;

FIG. 24 illustrates an example of overlapping 16-port CSI-RS pattern configurations according to some embodiments of the present disclosure;

FIG. 25 illustrates another example of overlapping 16-port CSI-RS pattern configurations according to some embodiments of the present disclosure;

FIG. 26 illustrates another example of overlapping 16-port CSI-RS pattern configurations according to some embodiments of the present disclosure;

FIG. 27 illustrates yet another example of overlapping 16-port CSI-RS pattern configurations according to some embodiments of the present disclosure;

FIG. 28 illustrates another example of overlapping 16-port CSI-RS pattern configurations according to some embodiments of the present disclosure;

FIG. 29 illustrates another example of overlapping 16-port CSI-RS pattern configurations according to some embodiments of the present disclosure;

FIG. 30 illustrates yet another example of overlapping 16-port CSI-RS pattern configurations according to some embodiments of the present disclosure;

FIG. 31 illustrates yet another example of overlapping 16-port CSI-RS pattern configurations according to some embodiments of the present disclosure;

FIG. 32 illustrates another example of overlapping 16-port CSI-RS pattern configurations according to some embodiments of the present disclosure;

FIG. 33 illustrates another example of overlapping 16-port CSI-RS pattern configurations according to some embodiments of the present disclosure;

FIG. 34 illustrates another example of overlapping 16-port CSI-RS pattern configurations according to some embodiments of the present disclosure;

FIG. 35 illustrates another example of overlapping 16-port CSI-RS pattern configurations according to some embodiments of the present disclosure;

FIG. 36 illustrates another example of overlapping 16-port CSI-RS pattern configurations according to some embodiments of the present disclosure;

FIG. 37 illustrates another example of overlapping 16-port CSI-RS pattern configurations according to some embodiments of the present disclosure;

FIG. 38 illustrates another example of overlapping 16-port CSI-RS pattern configurations according to some embodiments of the present disclosure;

FIG. 39 illustrates another example of overlapping 16-port CSI-RS pattern configurations according to some embodiments of the present disclosure;

FIG. 40 illustrates another example of overlapping 16-port CSI-RS pattern configurations according to some embodiments of the present disclosure; and

FIG. 41 illustrates another example of overlapping 16-port CSI-RS pattern configurations according to some embodiments of the present disclosure.

## DETAILED DESCRIPTION

Due to the CSI-RS sequence design in NR 3GPP Rel-15, "false PMI reporting" due to pilot contamination occurs when colliding CSI-RS between serving cell and neighbor cell is used and the WD is in the handover region where the interfering cell is of similar power level as the serving cell. This may lead to high block error rate (BLER) and correspondingly severe WD throughput degradation since the serving cell may transmit in the wrong direction based on the false PMI report.

One way to reduce this interference is to apply a CSI-RS re-use pattern and transmit CSI-RS in neighboring cell in different slots so that they do not collide with each other. However, this leads to an increase in CSI-RS to physical downlink shared channel (PDSCH) interference which has a larger detrimental impact on performance than the CSI-RS interference itself. Thus, the solution is worse than the problem.

An inter-cell CSI-RS shifting method is proposed, where CSI-RS resources are partially overlapped between different cells in a CSI-RS reuse group.

Due to that, the interfering CSI-RS resource only partially overlaps with the serving CSI-RS resource, the structure of the interference becomes more spatially uncorrelated leading to lower chance of erroneous PMI determination by the WD, which improves WD DL performance in the handover region. Simultaneously, the excessive CSI-RS to PDSCH interference associated with the prior art CSI-RS reuse scheme may be avoided, which improves PDSCH performance.

Before describing in detail exemplary embodiments, it is noted that the embodiments reside primarily in combinations of apparatus components and processing steps related to partially overlapped channel state information reference signal (CSI-RS) shifting. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), integrated access and backhaul (IAB) node, relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device, etc.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), IAB node, relay node, access point, radio access point, Remote Radio Unit (RRU) Remote Radio Head (RRH).

In some embodiments, the term "overlap" means overlap of at least part of a time-frequency resource.

The term "signaling" used herein may comprise any of: high-layer signaling (e.g., via Radio Resource Control (RRC) or a like), lower-layer signaling (e.g., via a physical control channel or a broadcast channel), or a combination thereof. The signaling may be implicit or explicit. The signaling may further be unicast, multicast or broadcast. The signaling may also be directly to another node or via a third node.

Signaling may generally comprise one or more symbols and/or signals and/or messages. A signal may comprise or represent one or more bits. An indication may represent signaling, and/or be implemented as a signal, or as a plurality of signals. One or more signals may be included in and/or represented by a message. Signaling, in particular control signaling, may comprise a plurality of signals and/or messages, which may be transmitted on different carriers and/or be associated to different signaling processes, e.g. representing and/or pertaining to one or more such processes and/or corresponding information. An indication may comprise signaling, and/or a plurality of signals and/or messages and/or may be comprised therein, which may be transmitted on different carriers and/or be associated to different acknowledgement signaling processes, e.g. representing and/or pertaining to one or more such processes. Signaling associated to a channel may be transmitted such that represents signaling and/or information for that channel, and/or that the signaling is interpreted by the transmitter and/or receiver to belong to that channel. Such signaling may generally comply with transmission parameters and/or format/s for the channel.

Configuring a Radio Node

Configuring a radio node, in particular a terminal or user equipment or the WD, may refer to the radio node being adapted or caused or set and/or instructed to operate according to the configuration. Configuring may be done by another device, e.g., a network node (for example, a radio node of the network like a base station or eNodeB) or network, in which case it may comprise transmitting configuration data to the radio node to be configured. Such configuration data may represent the configuration to be configured and/or comprise one or more instruction pertaining to a configuration, e.g. a configuration for transmitting and/or receiving on allocated resources, in particular frequency resources, or e.g., configuration for performing certain measurements on certain subframes or radio resources. A radio node may configure itself, e.g., based on configuration data received from a network or network node. A network node may use, and/or be adapted to use, its circuitry/ies for configuring. Allocation information may be considered a form of configuration data. Configuration data may comprise and/or be represented by configuration information, and/or one or more corresponding indications and/or message/s.

Configuring in general

Generally, configuring may include determining configuration data representing the configuration and providing, e.g. transmitting, it to one or more other nodes (parallel and/or sequentially), which may transmit it further to the radio node (or another node, which may be repeated until it reaches the wireless device). Alternatively, or additionally, configuring a radio node, e.g., by a network node or other device, may include receiving configuration data and/or data pertaining to configuration data, e.g., from another node like a network node, which may be a higher-level node of the network, and/or transmitting received configuration data to the radio node. Accordingly, determining a configuration and transmitting the configuration data to the radio node may be performed by different network nodes or entities, which may be able to communicate via a suitable interface, e.g., an X2 interface in the case of LTE or a corresponding interface for NR. Configuring a terminal (e.g. WD) may comprise scheduling downlink and/or uplink transmissions for the terminal, e.g. downlink data and/or downlink control signaling and/or DCI and/or uplink control or data or communication signaling, in particular acknowledgement signaling, and/or configuring resources and/or a resource pool therefor. In particular, configuring a terminal (e.g. WD) may comprise configuring the WD to perform certain measurements on certain subframes or radio resources and reporting such measurements according to embodiments of the present disclosure.

A resource element may represent a smallest time-frequency resource, e.g. representing the time and frequency range covered by one symbol or a number of bits represented in a common modulation. A resource element may e.g. cover a symbol time length and a subcarrier, in particular in 3GPP and/or LTE standards. A data transmission may represent and/or pertain to transmission of specific data, e.g. a specific block of data and/or transport block.

A cell may be generally a communication cell, e.g., of a cellular or mobile communication network, provided by a node. A serving cell may be a cell on or via which a network node (the node providing or associated to the cell, e.g., base station or eNodeB) transmits and/or may transmit data (which may be data other than broadcast data) to a user equipment, in particular control and/or user or payload data, and/or via or on which a user equipment transmits and/or may transmit data to the node; a serving cell may be a cell for or on which the user equipment is configured and/or to which it is synchronized and/or has performed an access procedure, e.g., a random access procedure, and/or in relation to which it is in a RRC_connected or RRC_idle state, e.g., in case the node and/or user equipment and/or network follow a 5G or LTE-standard. One or more carriers (e.g., uplink and/or downlink carrier/s and/or a carrier for both uplink and downlink) may be associated to a cell.

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

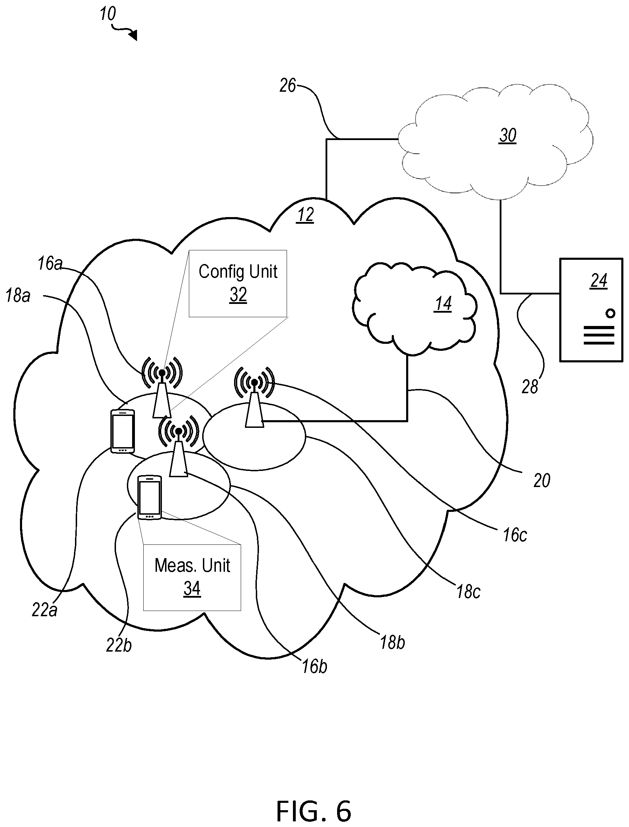

Referring again to the drawing figures, in which like elements are referred to by like reference numerals, there is shown in FIG. 6 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB for LTE/E-UTRAN and a gNB for NR/NG-RAN.

The communication system 10 may itself be connected to a host computer 24, which may be embodied in the hardware and/or software of a standalone server, a cloud-implemented server, a distributed server or as processing resources in a server farm. The host computer 24 may be under the ownership or control of a service provider, or may be operated by the service provider or on behalf of the service provider. The connections 26, 28 between the communication system 10 and the host computer 24 may extend directly from the core network 14 to the host computer 24 or may extend via an optional intermediate network 30. The intermediate network 30 may be one of, or a combination of more than one of, a public, private or hosted network. The intermediate network 30, if any, may be a backbone network or the Internet. In some embodiments, the intermediate network 30 may comprise two or more sub-networks (not shown).

The communication system of FIG. 6 as a whole enables connectivity between one of the connected WDs 22a, 22b and the host computer 24. The connectivity may be described as an over-the-top (OTT) connection. The host computer 24 and the connected WDs 22a, 22b are configured to communicate data and/or signaling via the OTT connection, using the access network 12, the core network 14, any intermediate network 30 and possible further infrastructure (not shown) as intermediaries. The OTT connection may be transparent in the sense that at least some of the participating communication devices through which the OTT connection passes are unaware of routing of uplink and downlink communications. For example, a network node 16 may not or need not be informed about the past routing of an incoming downlink communication with data originating from a host computer 24 to be forwarded (e.g., handed over) to a connected WD 22a. Similarly, the network node 16 need not be aware of the future routing of an outgoing uplink communication originating from the WD 22a towards the host computer 24.

A network node 16 is configured to include a configuration unit 32 which is configured to configure a channel state information reference signal (CSI-RS) resource of a set of candidate CSI-RS resources, the CSI-RS resource partially overlapping at least one other CSI-RS resource in the set; and optionally, transmit CSI-RS signalling on the configured CSI-RS resource.

A wireless device 22 is configured to include a measurement unit 34 which is configured to receive a configuration of a channel state information reference signal (CSI-RS) resource of a set of candidate CSI-RS resources, the CSI-RS resource partially overlapping at least one other CSI-RS resource in the set; and optionally, receive CSI-RS signalling on the configured CSI-RS resource.

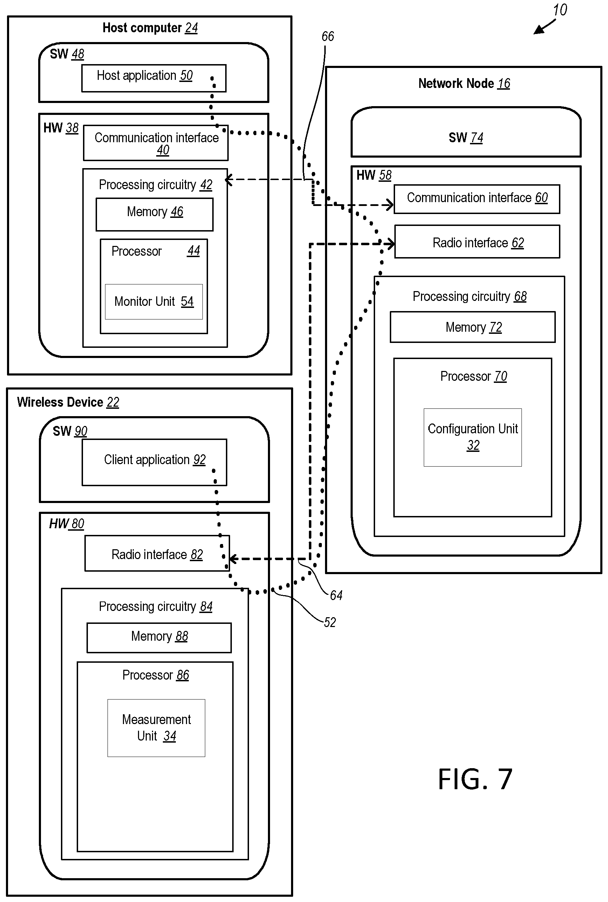

Example implementations, in accordance with an embodiment, of the WD 22, network node 16 and host computer 24 discussed in the preceding paragraphs will now be described with reference to FIG. 7. In a communication system 10, a host computer 24 comprises hardware (HW) 38 including a communication interface 40 configured to set up and maintain a wired or wireless connection with an interface of a different communication device of the communication system 10. The host computer 24 further comprises processing circuitry 42, which may have storage and/or processing capabilities. The processing circuitry 42 may include a processor 44 and memory 46. In particular, in addition to or instead of a processor, such as a central processing unit, and memory, the processing circuitry 42 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 44 may be configured to access (e.g., write to and/or read from) memory 46, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Processing circuitry 42 may be configured to control any of the methods and/or processes described herein and/or to cause such methods, and/or processes to be performed, e.g., by host computer 24. Processor 44 corresponds to one or more processors 44 for performing host computer 24 functions described herein. The host computer 24 includes memory 46 that is configured to store data, programmatic software code and/or other information described herein. In some embodiments, the software 48 and/or the host application 50 may include instructions that, when executed by the processor 44 and/or processing circuitry 42, causes the processor 44 and/or processing circuitry 42 to perform the processes described herein with respect to host computer 24. The instructions may be software associated with the host computer 24.

The software 48 may be executable by the processing circuitry 42. The software 48 includes a host application 50. The host application 50 may be operable to provide a service to a remote user, such as a WD 22 connecting via an OTT connection 52 terminating at the WD 22 and the host computer 24. In providing the service to the remote user, the host application 50 may provide user data which is transmitted using the OTT connection 52. The "user data" may be data and information described herein as implementing the described functionality. In one embodiment, the host computer 24 may be configured for providing control and functionality to a service provider and may be operated by the service provider or on behalf of the service provider. The processing circuitry 42 of the host computer 24 may enable the host computer 24 to observe, monitor, control, transmit to and/or receive from the network node 16 and/or the wireless device 22. The processing circuitry 42 of the host computer 24 may include a monitor unit 54 configured to enable the service provider to observe, monitor, control, transmit to and/or receive from the network node 16 and/or the wireless device 22.

The communication system 10 further includes a network node 16 provided in a communication system 10 and including hardware 58 enabling it to communicate with the host computer 24 and with the WD 22. The hardware 58 may include a communication interface 60 for setting up and maintaining a wired or wireless connection with an interface of a different communication device of the communication system 10, as well as a radio interface 62 for setting up and maintaining at least a wireless connection 64 with a WD 22 located in a coverage area 18 served by the network node 16. The radio interface 62 may be formed as or may include, for example, one or more RF transmitters, one or more RF receivers, and/or one or more RF transceivers. The communication interface 60 may be configured to facilitate a connection 66 to the host computer 24. The connection 66 may be direct or it may pass through a core network 14 of the communication system 10 and/or through one or more intermediate networks 30 outside the communication system 10.

In the embodiment shown, the hardware 58 of the network node 16 further includes processing circuitry 68. The processing circuitry 68 may include a processor 70 and a memory 72. In particular, in addition to or instead of a processor, such as a central processing unit, and memory, the processing circuitry 68 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 70 may be configured to access (e.g., write to and/or read from) the memory 72, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

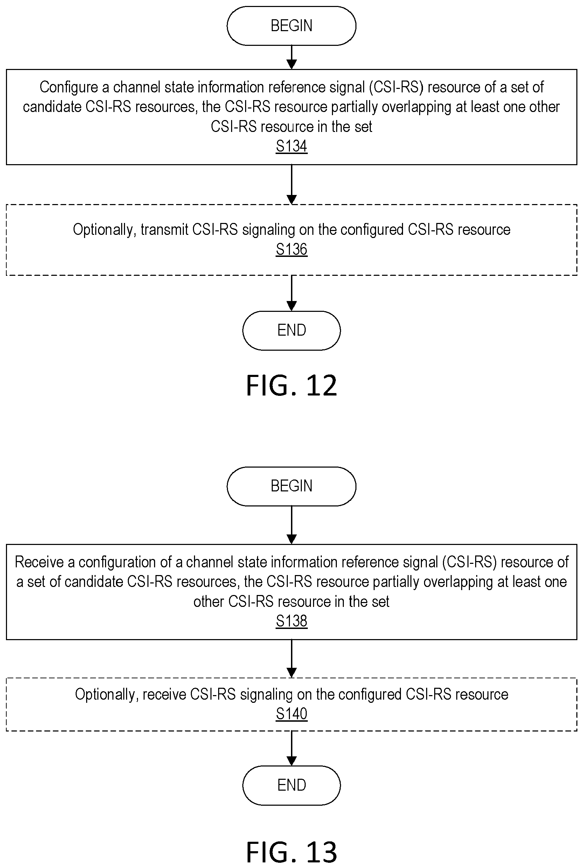

Thus, the network node 16 further has software 74 stored internally in, for example, memory 72, or stored in external memory (e.g., database, storage array, network storage device, etc.) accessible by the network node 16 via an external connection. The software 74 may be executable by the processing circuitry 68. The processing circuitry 68 may be configured to control any of the methods and/or processes described herein and/or to cause such methods, and/or processes to be performed, e.g., by network node 16. Processor 70 corresponds to one or more processors 70 for performing network node 16 functions described herein. The memory 72 is configured to store data, programmatic software code and/or other information described herein. In some embodiments, the software 74 may include instructions that, when executed by the processor 70 and/or processing circuitry 68, causes the processor 70 and/or processing circuitry 68 to perform the processes described herein with respect to network node 16. For example, processing circuitry 68 of the network node 16 may include configuration unit 32 configured to perform network node methods discussed herein, such as the methods discussed with reference to FIG. 12 as well as other figures.

The communication system 10 further includes the WD 22 already referred to. The WD 22 may have hardware 80 that may include a radio interface 82 configured to set up and maintain a wireless connection 64 with a network node 16 serving a coverage area 18 in which the WD 22 is currently located. The radio interface 82 may be formed as or may include, for example, one or more RF transmitters, one or more RF receivers, and/or one or more RF transceivers.

The hardware 80 of the WD 22 further includes processing circuitry 84. The processing circuitry 84 may include a processor 86 and memory 88. In particular, in addition to or instead of a processor, such as a central processing unit, and memory, the processing circuitry 84 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 86 may be configured to access (e.g., write to and/or read from) memory 88, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 90, which is stored in, for example, memory 88 at the WD 22, or stored in external memory (e.g., database, storage array, network storage device, etc.) accessible by the WD 22. The software 90 may be executable by the processing circuitry 84. The software 90 may include a client application 92. The client application 92 may be operable to provide a service to a human or non-human user via the WD 22, with the support of the host computer 24. In the host computer 24, an executing host application 50 may communicate with the executing client application 92 via the OTT connection 52 terminating at the WD 22 and the host computer 24. In providing the service to the user, the client application 92 may receive request data from the host application 50 and provide user data in response to the request data. The OTT connection 52 may transfer both the request data and the user data. The client application 92 may interact with the user to generate the user data that it provides.

The processing circuitry 84 may be configured to control any of the methods and/or processes described herein and/or to cause such methods, and/or processes to be performed, e.g., by WD 22. The processor 86 corresponds to one or more processors 86 for performing WD 22 functions described herein. The WD 22 includes memory 88 that is configured to store data, programmatic software code and/or other information described herein. In some embodiments, the software 90 and/or the client application 92 may include instructions that, when executed by the processor 86 and/or processing circuitry 84, causes the processor 86 and/or processing circuitry 84 to perform the processes described herein with respect to WD 22. For example, the processing circuitry 84 of the wireless device 22 may include a measurement unit 34 configured to perform WD methods discussed herein, such as the methods discussed with reference to FIG. 13 as well as other figures.

In some embodiments, the inner workings of the network node 16, WD 22, and host computer 24 may be as shown in FIG. 7 and independently, the surrounding network topology may be that of FIG. 6.

In FIG. 7, the OTT connection 52 has been drawn abstractly to illustrate the communication between the host computer 24 and the wireless device 22 via the network node 16, without explicit reference to any intermediary devices and the precise routing of messages via these devices. Network infrastructure may determine the routing, which it may be configured to hide from the WD 22 or from the service provider operating the host computer 24, or both. While the OTT connection 52 is active, the network infrastructure may further take decisions by which it dynamically changes the routing (e.g., on the basis of load balancing consideration or reconfiguration of the network).

The wireless connection 64 between the WD 22 and the network node 16 is in accordance with the teachings of the embodiments described throughout this disclosure. One or more of the various embodiments improve the performance of OTT services provided to the WD 22 using the OTT connection 52, in which the wireless connection 64 may form the last segment. More precisely, the teachings of some of these embodiments may improve the data rate, latency, and/or power consumption and thereby provide benefits such as reduced user waiting time, relaxed restriction on file size, better responsiveness, extended battery lifetime, etc.

In some embodiments, a measurement procedure may be provided for the purpose of monitoring data rate, latency and other factors on which the one or more embodiments improve. There may further be an optional network functionality for reconfiguring the OTT connection 52 between the host computer 24 and WD 22, in response to variations in the measurement results. The measurement procedure and/or the network functionality for reconfiguring the OTT connection 52 may be implemented in the software 48 of the host computer 24 or in the software 90 of the WD 22, or both. In embodiments, sensors (not shown) may be deployed in or in association with communication devices through which the OTT connection 52 passes; the sensors may participate in the measurement procedure by supplying values of the monitored quantities exemplified above, or supplying values of other physical quantities from which software 48, 90 may compute or estimate the monitored quantities. The reconfiguring of the OTT connection 52 may include message format, retransmission settings, preferred routing etc.; the reconfiguring need not affect the network node 16, and it may be unknown or imperceptible to the network node 16. Some such procedures and functionalities may be known and practiced in the art. In certain embodiments, measurements may involve proprietary WD signaling facilitating the host computer's 24 measurements of throughput, propagation times, latency and the like. In some embodiments, the measurements may be implemented in that the software 48, 90 causes messages to be transmitted, in particular empty or 'dummy' messages, using the OTT connection 52 while it monitors propagation times, errors etc.

Thus, in some embodiments, the host computer 24 includes processing circuitry 42 configured to provide user data and a communication interface 40 that is configured to forward the user data to a cellular network for transmission to the WD 22. In some embodiments, the cellular network also includes the network node 16 with a radio interface 62. In some embodiments, the network node 16 is configured to, and/or the network node's 16 processing circuitry 68 is configured to perform the functions and/or methods described herein for preparing/initiating/maintaining/supporting/ending a transmission to the WD 22, and/or preparing/terminating/maintaining/supporting/ending in receipt of a transmission from the WD 22.

In some embodiments, the host computer 24 includes processing circuitry 42 and a communication interface 40 that is configured to a communication interface 40 configured to receive user data originating from a transmission from a WD 22 to a network node 16. In some embodiments, the WD 22 is configured to, and/or comprises a radio interface 82 and/or processing circuitry 84 configured to perform the functions and/or methods described herein for preparing/initiating/maintaining/supporting/ending a transmission to the network node 16, and/or preparing/terminating/maintaining/supporting/ending in receipt of a transmission from the network node 16.

Although FIGS. 6 and 7 show various "units" such as configuration unit 32, and measurement unit 34 as being within a respective processor, it is contemplated that these units may be implemented such that a portion of the unit is stored in a corresponding memory within the processing circuitry. In other words, the units may be implemented in hardware or in a combination of hardware and software within the processing circuitry. It is also understood that implementations of the various embodiments can be made without reliance on the OTT aspects, i.e., without the inclusion of the host computer 24 and the connection 28.

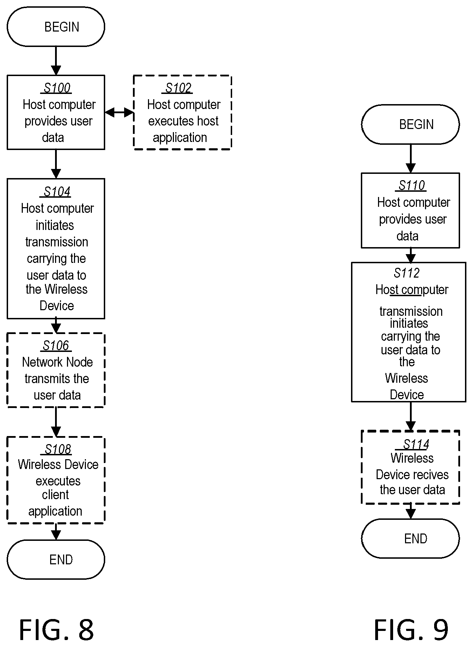

FIG. 8 is a flowchart illustrating an exemplary method implemented in a communication system, such as, for example, the communication system of FIGS. 6 and 7, in accordance with one embodiment. The communication system may include a host computer 24, a network node 16 and a WD 22, which may be those described with reference to FIG. 7. In a first step of the method, the host computer 24 provides user data (Block S100). In an optional substep of the first step, the host computer 24 provides the user data by executing a host application, such as, for example, the host application 50 (Block S102). In a second step, the host computer 24 initiates a transmission carrying the user data to the WD 22 (Block S104). In an optional third step, the network node 16 transmits to the WD 22 the user data which was carried in the transmission that the host computer 24 initiated, in accordance with the teachings of the embodiments described throughout this disclosure (Block S106). In an optional fourth step, the WD 22 executes a client application, such as, for example, the client application 92, associated with the host application 50 executed by the host computer 24 (Block S108).

FIG. 9 is a flowchart illustrating an exemplary method implemented in a communication system, such as, for example, the communication system of FIG. 6, in accordance with one embodiment. The communication system may include a host computer 24, a network node 16 and a WD 22, which may be those described with reference to FIGS. 6 and 7. In a first step of the method, the host computer 24 provides user data (Block S110). In an optional substep (not shown) the host computer 24 provides the user data by executing a host application, such as, for example, the host application 50. In a second step, the host computer 24 initiates a transmission carrying the user data to the WD 22 (Block S112). The transmission may pass via the network node 16, in accordance with the teachings of the embodiments described throughout this disclosure. In an optional third step, the WD 22 receives the user data carried in the transmission (Block S114).

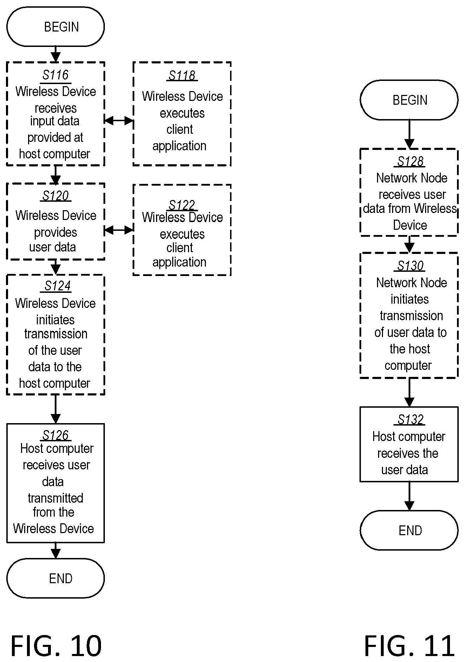

FIG. 10 is a flowchart illustrating an exemplary method implemented in a communication system, such as, for example, the communication system of FIG. 6, in accordance with one embodiment. The communication system may include a host computer 24, a network node 16 and a WD 22, which may be those described with reference to FIGS. 6 and 7. In an optional first step of the method, the WD 22 receives input data provided by the host computer 24 (Block S116). In an optional substep of the first step, the WD 22 executes the client application 92, which provides the user data in reaction to the received input data provided by the host computer 24 (Block S118). Additionally or alternatively, in an optional second step, the WD 22 provides user data (Block S120). In an optional substep of the second step, the WD provides the user data by executing a client application, such as, for example, client application 92 (Block S122). In providing the user data, the executed client application 92 may further consider user input received from the user. Regardless of the specific manner in which the user data was provided, the WD 22 may initiate, in an optional third substep, transmission of the user data to the host computer 24 (Block S124). In a fourth step of the method, the host computer 24 receives the user data transmitted from the WD 22, in accordance with the teachings of the embodiments described throughout this disclosure (Block S126).

FIG. 11 is a flowchart illustrating an exemplary method implemented in a communication system, such as, for example, the communication system of FIG. 6, in accordance with one embodiment. The communication system may include a host computer 24, a network node 16 and a WD 22, which may be those described with reference to FIGS. 6 and 7. In an optional first step of the method, in accordance with the teachings of the embodiments described throughout this disclosure, the network node 16 receives user data from the WD 22 (Block S128). In an optional second step, the network node 16 initiates transmission of the received user data to the host computer 24 (Block S130). In a third step, the host computer 24 receives the user data carried in the transmission initiated by the network node 16 (Block S132).

FIG. 12 is a flowchart of an exemplary process in a network node 16 according to some embodiments of the present disclosure. One or more Blocks and/or functions and/or methods performed by the network node 16 may be performed by one or more elements of network node 16 such as by configuration unit 32 in processing circuitry 68, processor 70, radio interface 62, etc. according to the example method. The example method includes configuring (Block S134), such as via configuration unit 32, processing circuitry 68, processor 70, communication interface 60 and/or radio interface 62, a channel state information reference signal (CSI-RS) resource of a set of candidate CSI-RS resources, the CSI-RS resource partially overlapping at least one other CSI-RS resource in the set. The method includes optionally, transmitting (Block S136), such as via configuration unit 32, processing circuitry 68, processor 70, communication interface 60 and/or radio interface 62, CSI-RS signalling on the configured CSI-RS resource.

In some embodiments, the CSI-RS resource partially overlaps the at least one other CSI-RS resource in a same slot. In some embodiments, each candidate CSI-RS resource in the set of candidate CSI-RS resources partially overlaps each of the other candidate CSI-RS resources in the set. In some embodiments, the method includes receiving CSI feedback, such as a CSI feedback report based on WD 22 measurements of the CSI-RS signalling.

FIG. 13 is a flowchart of an exemplary process in a wireless device 22 according to some embodiments of the present disclosure. One or more Blocks and/or functions and/or methods performed by WD 22 may be performed by one or more elements of WD 22 such as by measurement unit 34 in processing circuitry 84, processor 86, radio interface 82, etc. The example method includes receiving (Block S138), such as via measurement unit 34, processing circuitry 84, processor 86 and/or radio interface 82, a configuration of a channel state information reference signal (CSI-RS) resource of a set of candidate CSI-RS resources, the CSI-RS resource partially overlapping at least one other CSI-RS resource in the set. The method includes optionally, receiving (Block S140) CSI-RS signalling on the configured CSI-RS resource.

In some embodiments, the CSI-RS resource partially overlaps the at least one other CSI-RS resource in a same slot. In some embodiments, each candidate CSI-RS resource in the set of candidate CSI-RS resources partially overlaps each of the other candidate CSI-RS resources in the set. In some embodiments, the method includes performing measurements on the received CSI-RS signalling and transmitting CSI feedback, such as a CSI feedback report based on the WD 22 measurements of the CSI-RS signalling.

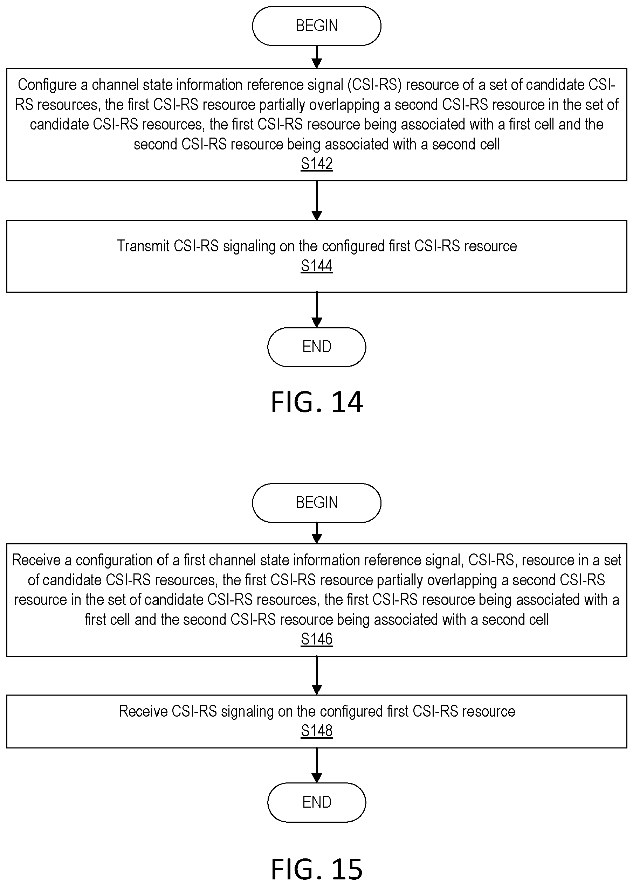

FIG. 14 is a flowchart of an exemplary process in a network node 16 according to some embodiments of the present disclosure. One or more Blocks and/or functions and/or methods performed by the network node 16 may be performed by one or more elements of network node 16 such as by configuration unit 32 in processing circuitry 68, processor 70, radio interface 62, etc. according to the example method. The example method includes configuring (Block S142), such as by configuration unit 32 in processing circuitry 68, processor 70, communication interface 60 and/or radio interface 62, a first channel state information reference signal, CSI-RS, resource in a set of candidate CSI-RS resources, the first CSI-RS resource partially overlapping a second CSI-RS resource in the set of candidate CSI-RS resources, the first CSI-RS resource being associated with a first cell and the second CSI-RS resource being associated with a second cell. The method includes transmitting (Block S144), such as by configuration unit 32 in processing circuitry 68, processor 70, communication interface 60 and/or radio interface 62, CSI-RS signaling on the configured first CSI-RS resource.

In some embodiments, the first CSI-RS resource partially overlaps the second CSI-RS resource in at least one time-frequency resource within a slot. In some embodiments, each CSI-RS resource in the set of candidate CSI-RS resources occupies a set of time-frequency resource elements, REs, within a slot and a subset of resource elements of the first CSI-RS resource are occupied by a subset of resource elements of the second CSI-RS resource. In some embodiments, the first cell is a serving cell and the second cell is a neighboring cell. In some embodiments, each candidate CSI-RS resource in the set of candidate CSI-RS resources partially overlaps each of the other candidate CSI-RS resources in the set within a slot. In some embodiments, the method further includes allocating, such as by configuration unit 32 in processing circuitry 68, processor 70, communication interface 60 and/or radio interface 62, a resource position for the first CSI-RS resource based on a physical cell ID, PCI, associated with the first cell.

In some embodiments, allocating comprises allocating, such as by configuration unit 32 in processing circuitry 68, processor 70, communication interface 60 and/or radio interface 62, the resource position for the first CSI-RS resource based on the PCI modulus N, N being a number of resource positions for CSI-RS resources in the set of candidate CSI-RS resources. In some embodiments, the second CSI-RS resource is based on a PCI associated with the second cell. In some embodiments, the candidate CSI-RS resources in the set are shifted relative to each other within a slot based on an index value. In some embodiments, the first cell has a corresponding first index value and the second cell has a corresponding second index value, the second index value being different from the first index value. In some embodiments, the method further includes applying, such as by configuration unit 32 in processing circuitry 68, processor 70, communication interface 60 and/or radio interface 62, a modulation and coding scheme, MCS, backoff in a slot on which the CSI-RS signaling is transmitted.

FIG. 15 is a flowchart of an exemplary process in a wireless device 22 according to some embodiments of the present disclosure. One or more Blocks and/or functions and/or methods performed by WD 22 may be performed by one or more elements of WD 22 such as by measurement unit 34 in processing circuitry 84, processor 86, radio interface 82, etc. The example method includes receiving (Block S146), such as by measurement unit 34 in processing circuitry 84, processor 86 and/or radio interface 82, a configuration of a first channel state information reference signal, CSI-RS, resource in a set of candidate CSI-RS resources, the first CSI-RS resource partially overlapping a second CSI-RS resource in the set of candidate CSI-RS resources, the first CSI-RS resource being associated with a first cell and the second CSI-RS resource being associated with a second cell. The method includes receiving (Block S148), such as by measurement unit 34 in processing circuitry 84, processor 86 and/or radio interface 82, CSI-RS signaling on the configured first CSI-RS resource.

In some embodiments, the first CSI-RS resource partially overlaps the second CSI-RS resource in at least one time-frequency resource within a slot. In some embodiments, each CSI-RS resource in the set of candidate CSI-RS resources occupies a set of time-frequency resource elements, REs, within a slot and a subset of resource elements of the first CSI-RS resource are occupied by a subset of resource elements of the second CSI-RS resource. In some embodiments, the first cell is a serving cell and the second cell is a neighboring cell. In some embodiments, each candidate CSI-RS resource in the set of candidate CSI-RS resources partially overlaps each of the other candidate CSI-RS resources in the set within a slot.

In some embodiments, the method further includes receiving, such as by measurement unit 34 in processing circuitry 84, processor 86 and/or radio interface 82, an allocation of a resource position for the first CSI-RS resource, the resource position being based on a physical cell ID, PCI, associated with the first cell. In some embodiments, the resource position for the first CSI-RS resource is based on the PCI modulus N, N being a number of resource positions for CSI-RS resources in the set of candidate CSI-RS resources. In some embodiments, the second CSI-RS resource is based on a PCI associated with the second cell. In some embodiments, the candidate CSI-RS resources in the set are shifted relative to each other within a slot based on an index value. In some embodiments, the first cell has a corresponding first index value and the second cell has a corresponding second index value, the second index value being different from the first index value. In some embodiments, the CSI-RS signaling is received according to a modulation and coding scheme, MCS, backoff.

Having described the general process flow of arrangements of the disclosure and having provided examples of hardware and software arrangements for implementing the processes and functions of the disclosure, the sections below provide details and examples of arrangements for partially overlapped channel state information reference signal (CSI-RS) shifting, which may be implemented by the network node 16, wireless device 22 and/or host computer 24.

As explained in the introduction above, a reason why false PMI reporting occurs with colliding CSI-RS is that the ports of the interfering CSI-RS resource directly collide the ports of the serving CSI-RS resources, as described by the below formula:

$$\widehat{\boldsymbol{h}}_A = \begin{bmatrix} h_A(0) \\ h_A(1) \\ h_A(2) \\ h_A(3) \\ h_A(4) \\ h_A(5) \\ h_A(6) \\ h_A(7) \end{bmatrix} + \beta \begin{bmatrix} h_B(0) \\ h_B(1) \\ h_B(2) \\ h_B(3) \\ h_B(4) \\ h_B(5) \\ h_B(6) \\ h_B(7) \end{bmatrix} = \boldsymbol{h}_A + \beta \boldsymbol{h}_B.$$

However, if the CSI-RS resources are only partially overlapping, the ports of the interfering CSI-RS resource will not collide directly with the same ports of the serving CSI-RS resource, as illustrated by the formula below:

$$\widehat{\boldsymbol{h}}_A = \begin{bmatrix} h_A(0) \\ h_A(1) \\ h_A(2) \\ h_A(3) \\ h_A(4) \\ h_A(5) \\ h_A(6) \\ h_A(7) \end{bmatrix} + \beta \begin{bmatrix} 0 \\ 0 \\ h_B(0) \\ h_B(1) \\ h_B(2) \\ h_B(3) \\ h_B(4) \\ h_B(5) \end{bmatrix} = \boldsymbol{h}_A + \beta \begin{bmatrix} \boldsymbol{0}_2 \\ \boldsymbol{h}_B(0{:}5) \end{bmatrix}.$$

This may reduce the effect of pilot contamination and erroneous PMI reporting.

To achieve a trade-off between the degree of pilot contamination and the degree of CSI-RS to PDSCH interference, some embodiments propose a method for CSI-RS transmission for network node 16 cells in a communication network. Each network node 16 cell is allocated a CSI-RS resource position from a set of candidate CSI-RS resource positions. Each CSI-RS resource occupies certain time-frequency resource elements within a slot.

The CSI-RS resource positions in the set may be characterized by that at least some of the CSI-RS resource positions partially overlap within the same slot. Where a partial overlap between a CSI-RS resource A and another CSI-RS resource B is defined such that resource A and B partially overlap if a *strict* subset of the resource elements of CSI-RS resource B is also occupied by a subset of the resource elements of CSI-RS resource A, but where some resource elements of CSI-RS resource B are not occupied by CSI-RS resource A. That is, CSI-RS resource A and CSI-RS resource B are not fully overlapping.

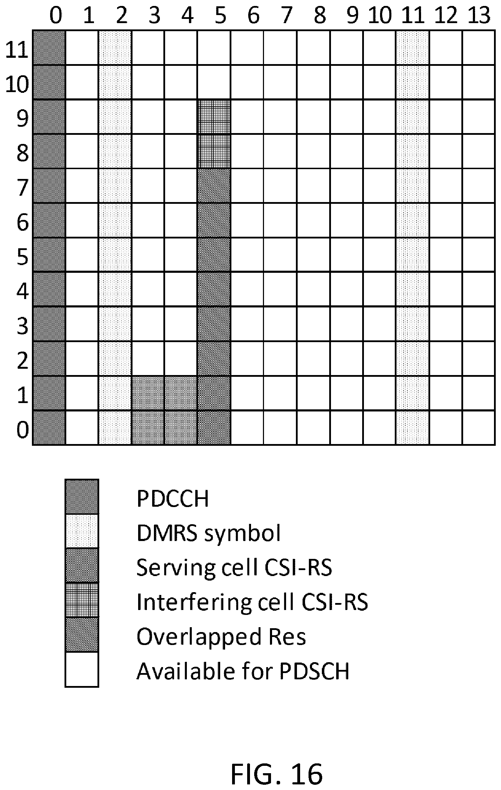

An example of partially overlapping CSI-RS resources is shown in FIG. 16. Here, a serving cell 8-port CSI-RS with 8x1 pattern is positioned with starting RE $(k_0, l_0) = (0,5)$, while an interfering cell CSI-RS resource also with an 8x1 pattern is positioned with starting RE $(k_0, l_0) = (2,5)$. The two resources are thus overlapping on subcarriers k=2, 3, 4, 5, 6, 7 but not on k=0, 1 and k=8, 9 which are occupied only by the serving cell CSI-RS and the interfering cell CSI-RS, respectively.

In one embodiment, all of the CSI-RS resource positions in the set are mutually partially overlapping, meaning that each resource in the set partially overlaps with any of the other resources in the set. In another embodiment, only some of the resources in the set are mutually overlapping while other resources are non-overlapping (meaning that they occupy disjoint sets of resource elements).

In one embodiment, network node 16 cells may be allocated different CSI-RS resource positions based on the Physical Cell ID (PCI) associated with the cell according to a certain re-use pattern. For instance, if the number of CSI-RS resource positions in the set is N, such that the CSI-RS resources n=0, 1,...N-1, may be indexed and a cell with PCI=$PCI_0$ may be allocated CSI-RS resource position $PCI_0$ mod $N$.

One benefit with the proposed method compared to the known CSI-RS reuse method based on non-overlapping CSI-RS resource positions is that CSI-RS to PDSCH interference may be reduced, especially compared to whether an inter-slot CSI-RS reuse pattern is used in the prior art. By the use of partially overlapping CSI-RS resources, all CSI-RS interference is concentrated to a single slot, resulting in that only a single slot is affected by excessive CSI-RS to PDSCH interference and resulting in higher BLER, instead of multiple slots.

*Example CSI-RS shifting patterns*

The CSI-RS resource positions within the slot are shifted with respect to the look-up table index (LUTindex) as described by the table below. Each LUTindex corresponds to one network node 16 cell in a CSI-RS reuse group.

| LUTindex | 0 | 1 | 2 | 3 | 4 | 5 |
|---|---|---|---|---|---|---|
| *CSI-RS pattern configuration* | A | B | C | D | E | F |
| *bitmask "other"* | '001111' | '011110' | '111100' | '001111' | '011110' | '111100' |
| *firstOFDMSymbolInTimeDomain* | 5 | 5 | 5 | 7 | 7 | 7 |
| *firstOFDMSymbolInTimeDomain2* | 7 | 7 | 7 | 9 | 9 | 9 |

*32 port CSI-RS patterns*

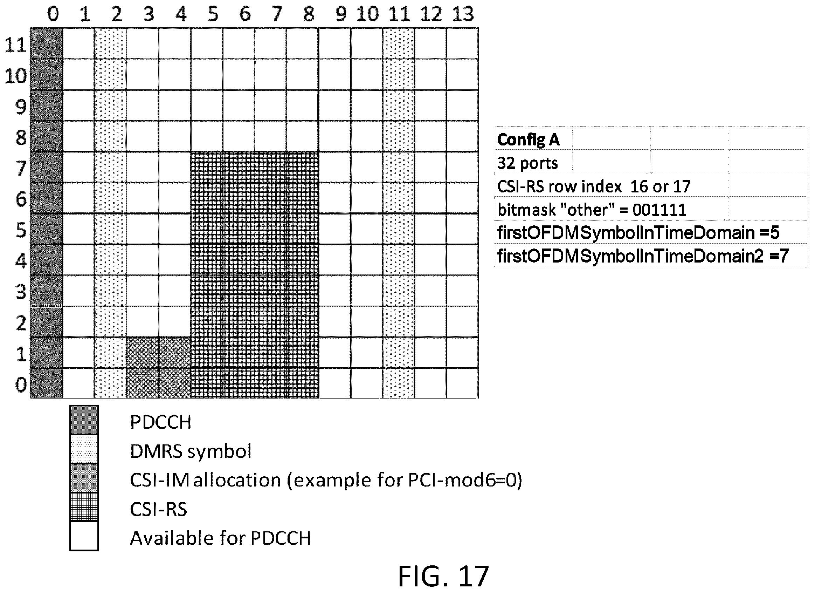

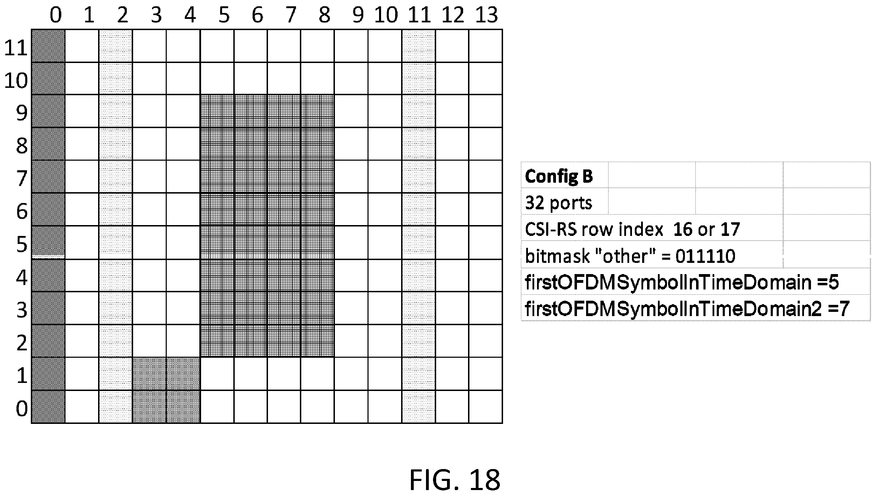

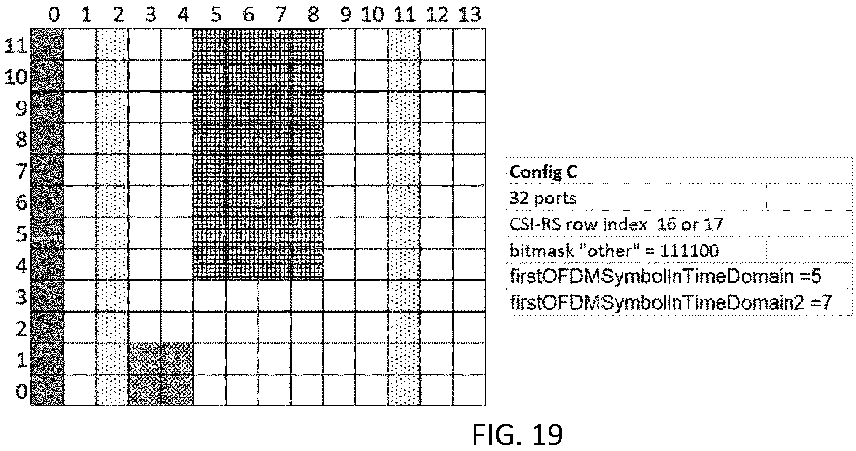

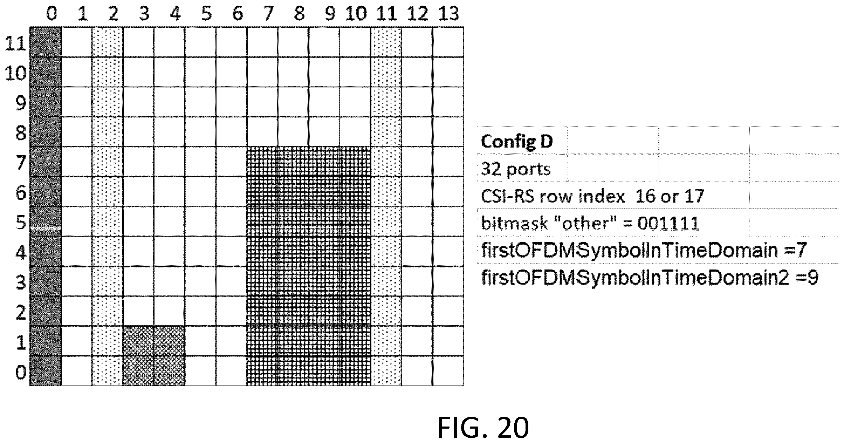

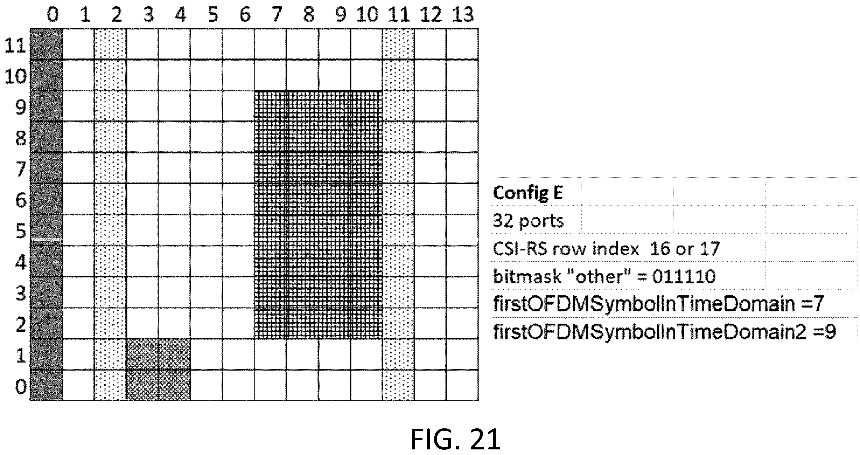

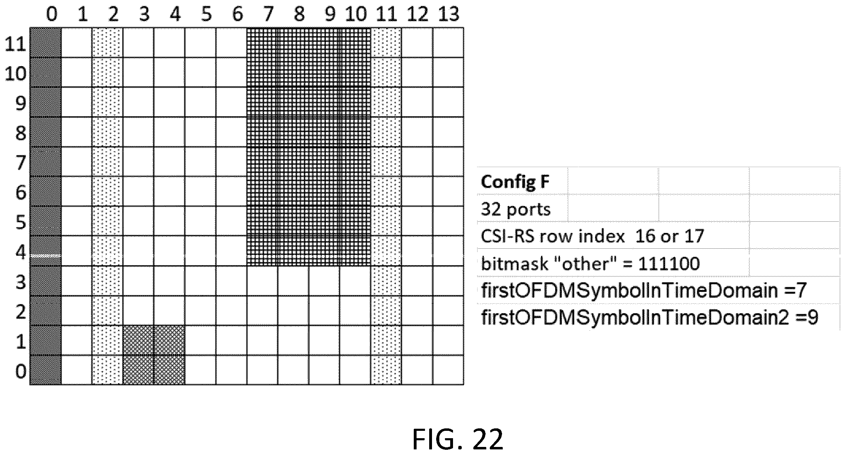

FIGS. 17-22 illustrate examples of 32-port CSI-RS patterns according to the LUT index in the table above. FIG. 17 illustrates the 32-port port CSI-RS pattern configuration A. FIG. 18 illustrates the 32-port port CSI-RS pattern configuration B. FIG. 19 illustrates the 32-port port CSI-RS pattern configuration C. FIG. 20 illustrates the 32-port port CSI-RS pattern configuration D. FIG. 21 illustrates the 32-port port CSI-RS pattern configuration E. FIG. 22 illustrates the 32-port port CSI-RS pattern configuration F. Note that the legend provided in FIG. 17 applies to FIGS. 18-22.

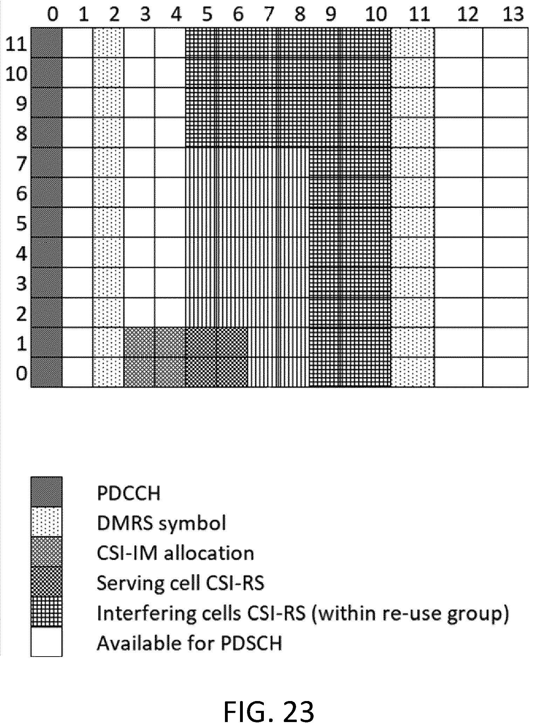

For example, if the serving cell supported by network node 16 is allocated the configuration A CSI-RS position, REs within the CSI-RS slot impacted by CSI-RS interference from within the cell reuse group is illustrated in FIG. 23.

Since the CSI-RS to PDSCH interference in this slot may be severe, ways to mitigate this effect can be considered.

In one embodiment, multiple ZP CSI-RS resources are configured in the CSI-RS slot such that the resource elements where the interfering cells CSI-RS patterns which are not colliding with the serving cell CSI-RS patterns are covered. This removes those resource elements to be used by PDSCH, which may improve the link adaption.

In another embodiment, a modulation and coding scheme (MCS) backoff is applied in the slot where the CSI-RS is transmitted, to take into account that a subset of the resource elements will be interfered by neighboring cell CSI-RS.

*16 port CSI-RS patterns*

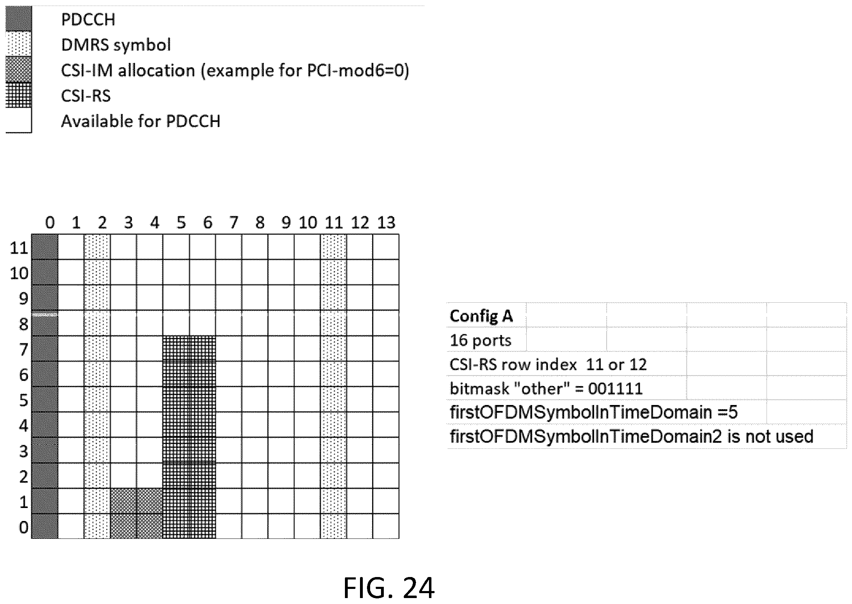

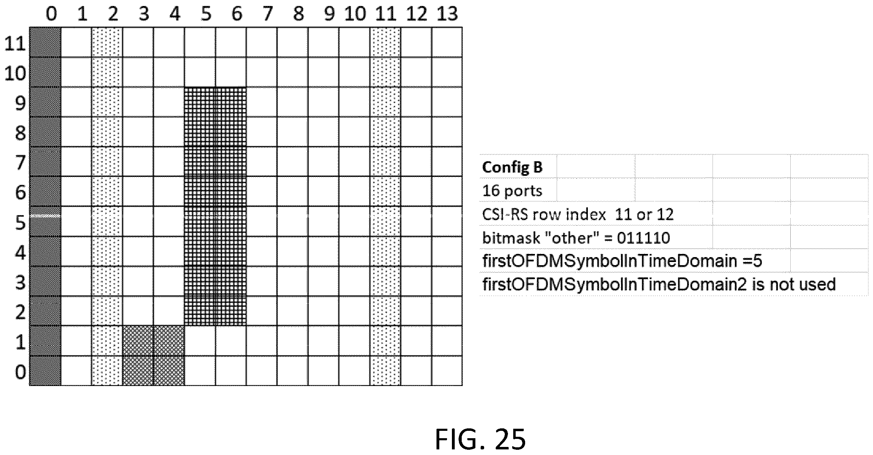

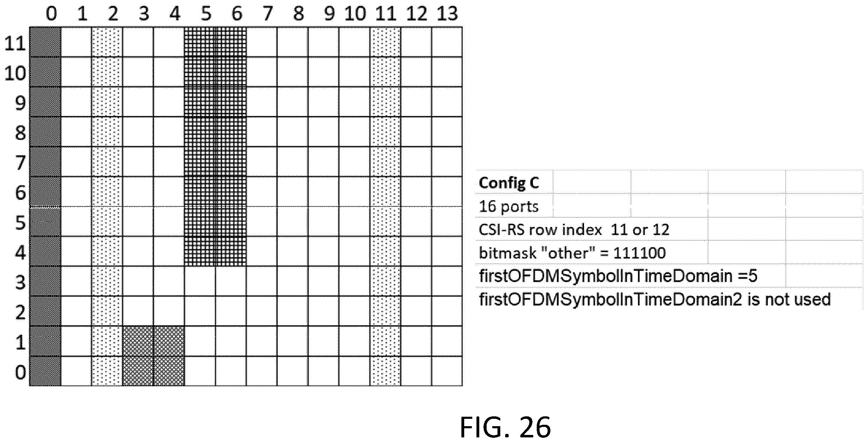

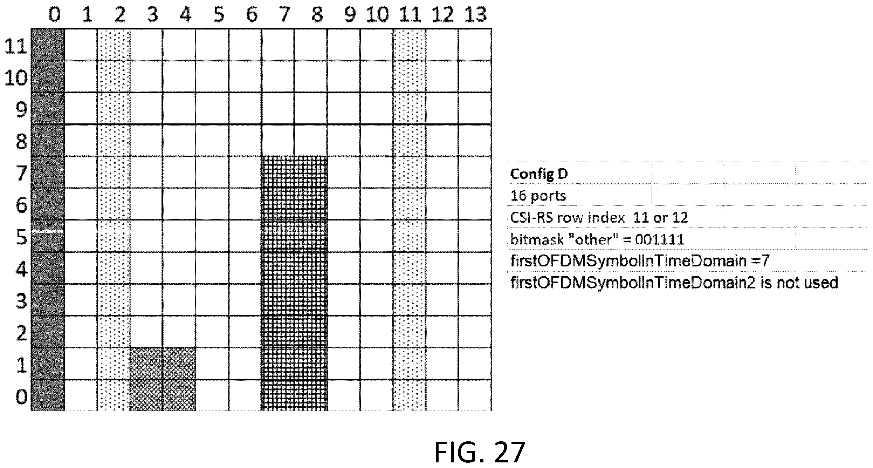

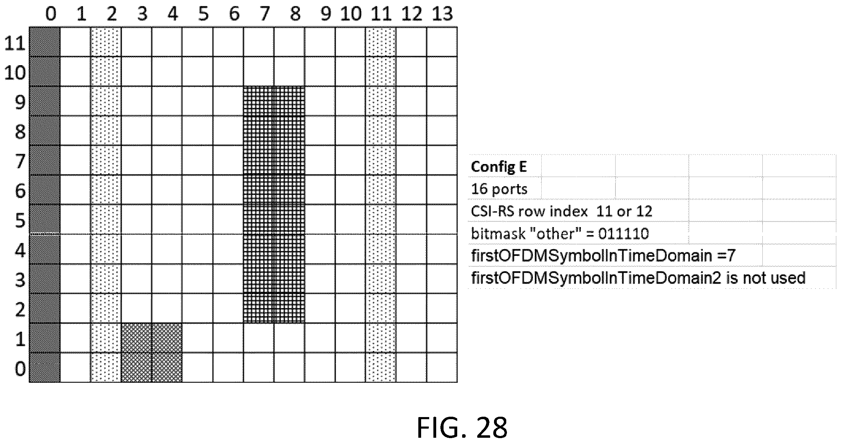

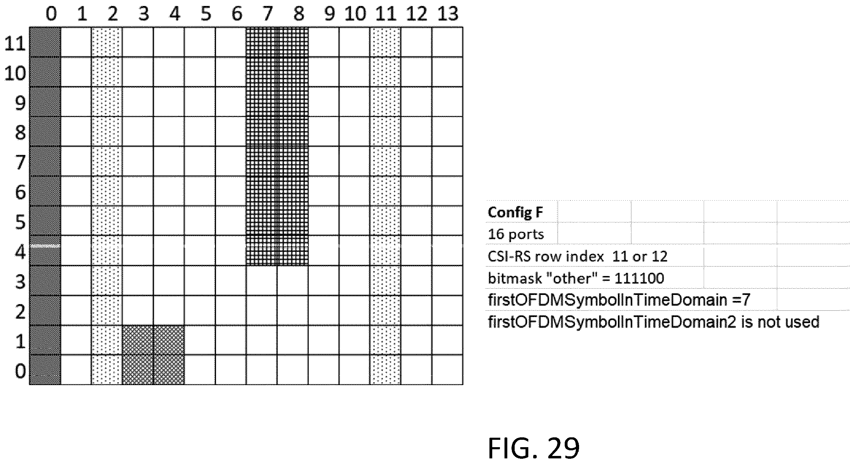

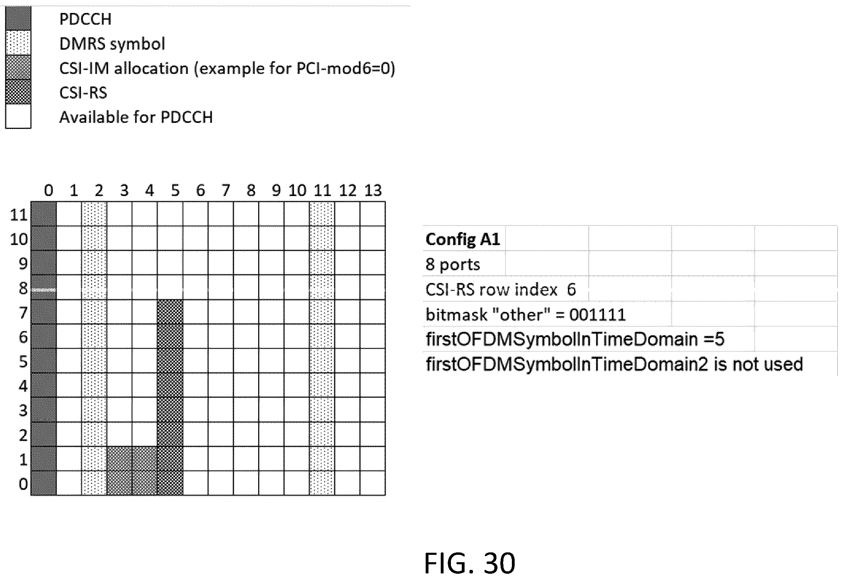

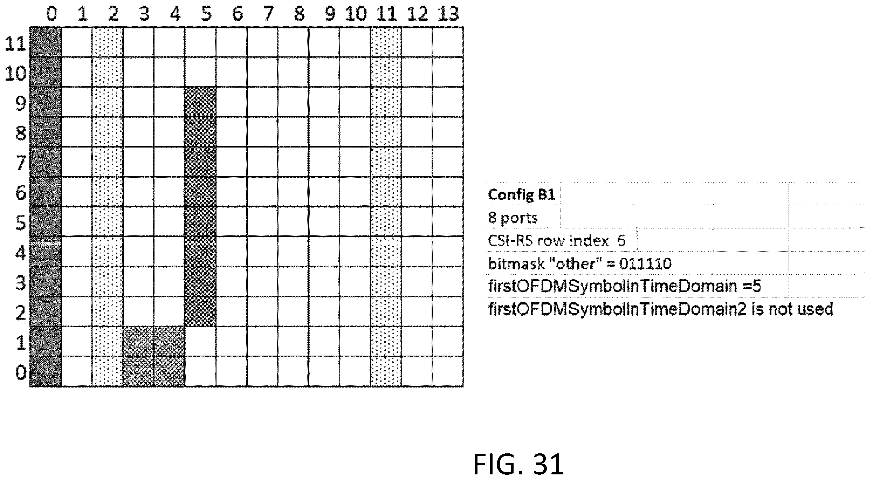

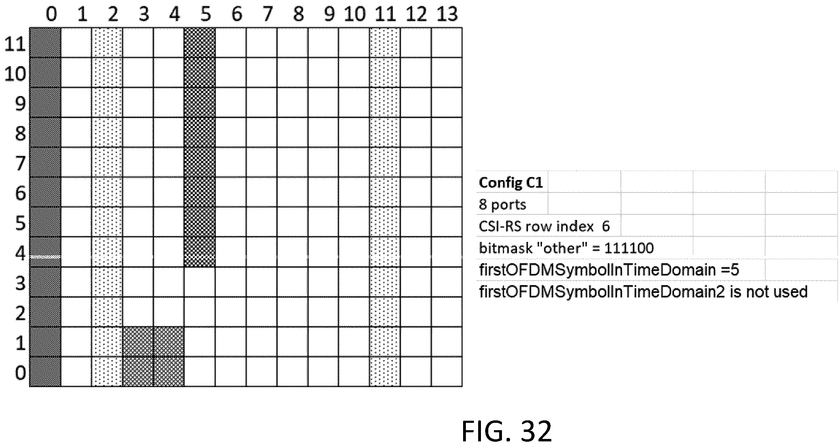

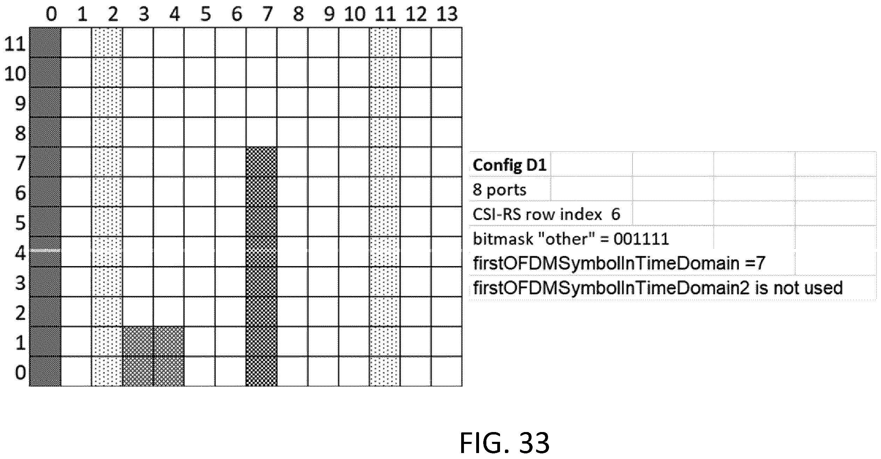

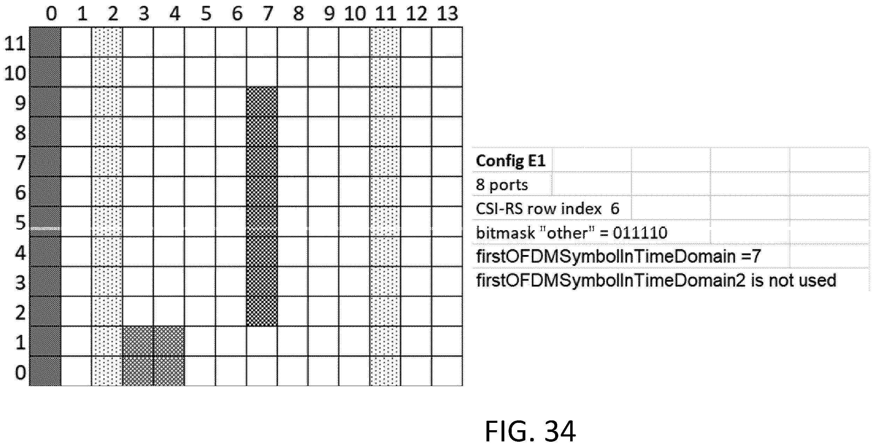

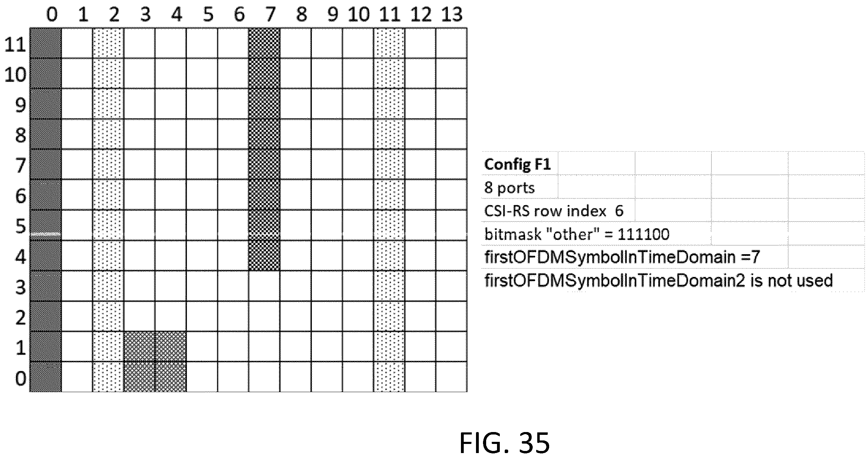

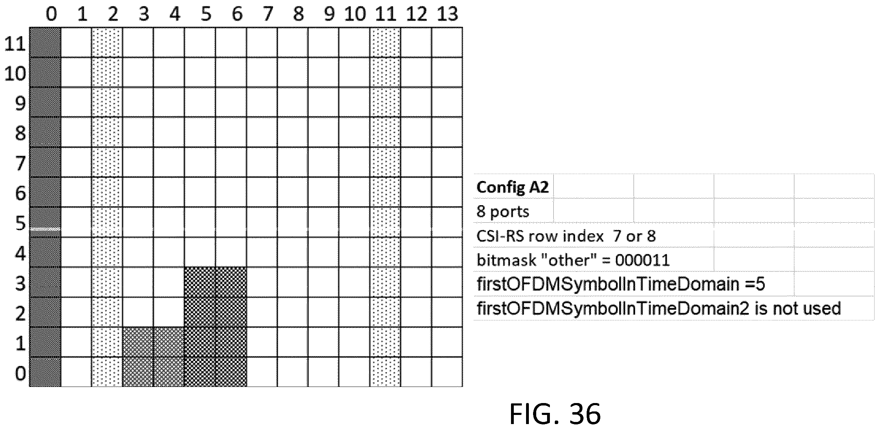

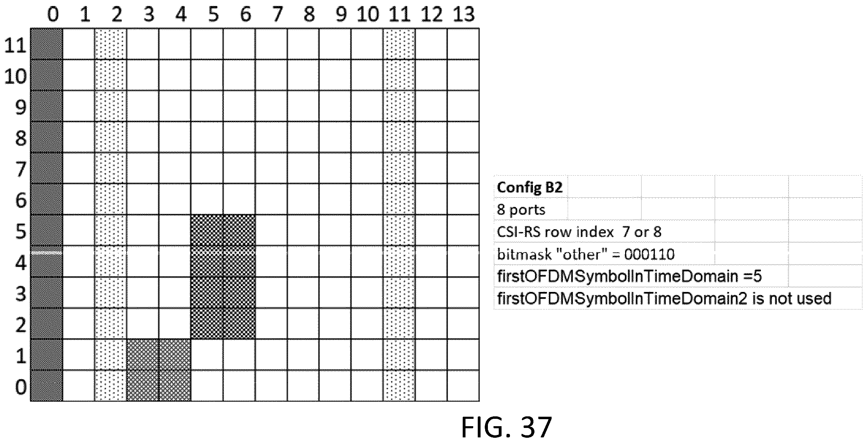

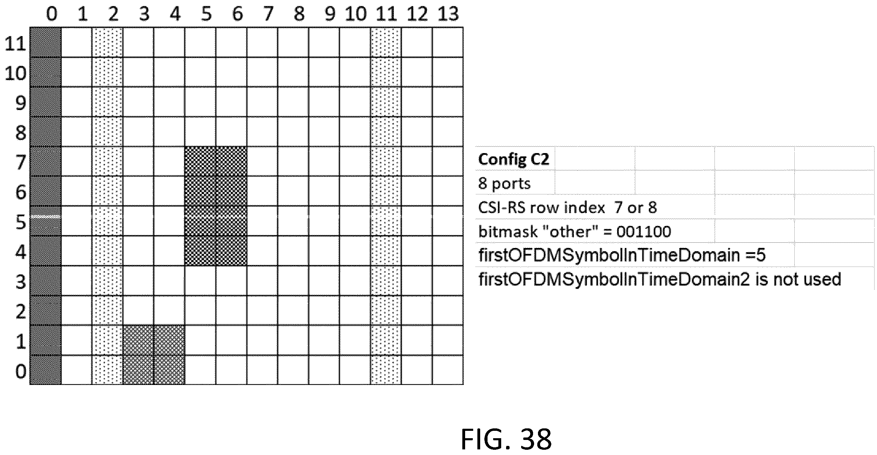

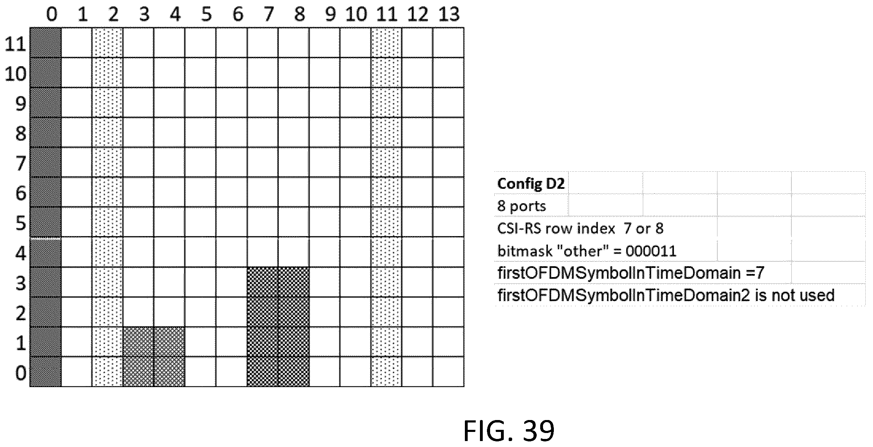

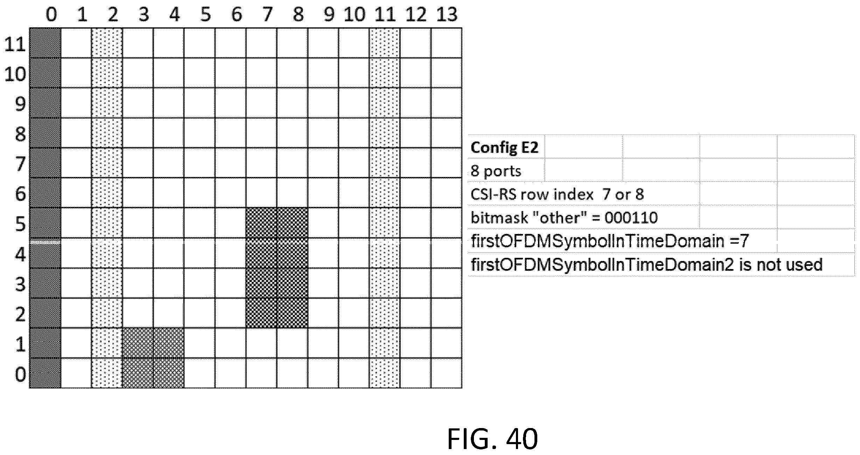

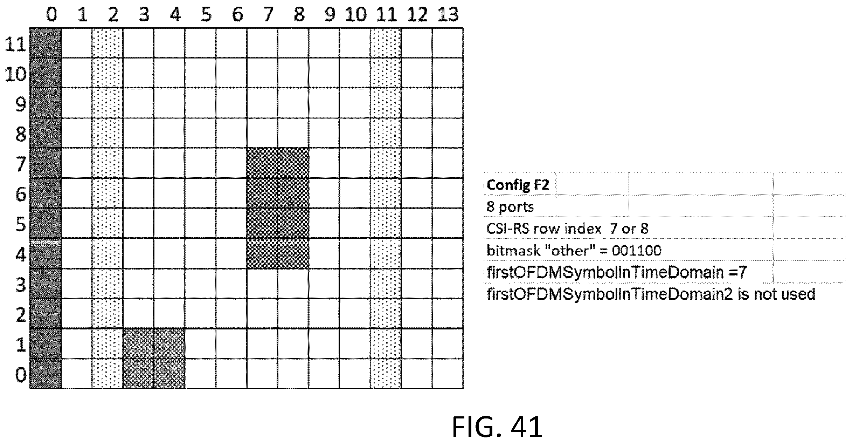

FIGS. 24-41 illustrate examples of 16-port CSI-RS patterns according to some embodiments of the present disclosure. In some embodiments, each of the patterns may correspond to an index in a table, such as the LUTindex table above. In some embodiments, each of the 16-port CSI-RS patterns may at most partially overlap (e.g., in the same time/frequency resources in the slot) with one or more of the other 16-port CSI-RS patterns depicted in FIGS. 24-41. Note that the legend provided in FIG. 24 applies also to FIGS. 25-29, and the legend provided in FIG. 30 applies also to FIGS. 31-41.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java® or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments.

Abbreviations that may be used in the preceding description include:

| Abbreviation | Explanation |
| --- | --- |
| CP | Cyclic Prefix |
| CRS | Common RS |
| CSI-RS | Channel State Information RS |

(continued)

| Abbreviation | Explanation |
|---|---|
| DM-RS | Demodulation RS |
| ID | Identifier |
| NR | New Radio |
| RS | Reference signal |
| TRS | Tracking RS |

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

**Claims**

1. A method implemented in a network node (16) configured to communicate with a wireless device, WD (22), the method comprising:

   configuring (S142) a first channel state information reference signal, CSI-RS, resource in a set of candidate CSI-RS resources, the first CSI-RS resource partially overlapping a second CSI-RS resource in the set of candidate CSI-RS resources, the first CSI-RS resource being associated with a first cell and the second CSI-RS resource being associated with a second cell; and
   transmitting (S144) a CSI-RS on the configured first CSI-RS resource;
   the method **characterized by** comprising:
   applying a modulation and coding scheme, MCS, backoff in a slot on which the CSI-RS is transmitted.

2. The method of Claim 1, wherein the first CSI-RS resource partially overlaps the second CSI-RS resource in at least one time-frequency resource within a slot.

3. The method of Claim 2, wherein each CSI-RS resource in the set of candidate CSI-RS resources occupies a set of time-frequency resource elements, REs, within a slot and a subset of resource elements of the first CSI-RS resource are occupied by a subset of resource elements of the second CSI-RS resource.

4. The method of any one of Claims 1-3, wherein the first cell is a serving cell and the second cell is a neighboring cell.

5. The method of any one of Claims 1-4, wherein each candidate CSI-RS resource in the set of candidate CSI-RS resources partially overlaps each of the other candidate CSI-RS resources in the set within a slot.

6. The method of any one of Claims 1-5, further comprising:
   allocating a resource position for the first CSI-RS resource based on a physical cell ID, PCI, associated with the first cell.

7. The method of Claim 6, wherein allocating comprises:
   allocating the resource position for the first CSI-RS resource based on the PCI modulus N, N being a number of resource positions for CSI-RS resources in the set of candidate CSI-RS resources.

8. The method of any one of Claims 6 and 7, wherein the second CSI-RS resource is based on a PCI associated with the second cell.

9. The method of any one of Claims 1-8, wherein the candidate CSI-RS resources in the set are shifted relative to each other within a slot based on an index value.

10. The method of Claim 9, wherein the first cell has a corresponding first index value and the second cell has a corresponding second index value, the second index value being different from the first index value.

11. A network node (16) configured to communicate with a wireless device, WD (22), the network node (16) comprising processing circuitry (68), the processing circuitry (68) configured to cause the network node (16) to:

configure a first channel state information reference signal, CSI-RS, resource in a set of candidate CSI-RS resources, the first CSI-RS resource partially overlapping a second CSI-RS resource in the set of candidate CSI-RS resources, the first CSI-RS resource being associated with a first cell and the second CSI-RS resource being associated with a second cell; and

transmit a CSI-RS on the configured first CSI-RS resource; wherein the processing circuitry (68) is **characterized by** causing the network node (16) to:

apply a modulation and coding scheme, MCS, backoff in a slot on which the CSI-RS is transmitted.

12. A method implemented in a wireless device, WD (22), configured to communicate with a network node (16), the method comprising:

receiving (S146) a configuration of a first channel state information reference signal, CSI-RS, resource in a set of candidate CSI-RS resources, the first CSI-RS resource partially overlapping a second CSI-RS resource in the set of candidate CSI-RS resources, the first CSI-RS resource being associated with a first cell and the second CSI-RS resource being associated with a second cell; and

receiving (S148) a CSI-RS on the configured first CSI-RS resource;

the method **characterized by** the CSI-RS being received according to a modulation and coding scheme, MCS, backoff.

13. A wireless device, WD (22), configured to communicate with a network node (16), the WD (22) comprising processing circuitry (84), the processing circuitry (84) configured to cause the WD (22) to:

receive a configuration of a first channel state information reference signal, CSI-RS, resource in a set of candidate CSI-RS resources, the first CSI-RS resource partially overlapping a second CSI-RS resource in the set of candidate CSI-RS resources, the first CSI-RS resource being associated with a first cell and the second CSI-RS resource being associated with a second cell; and

receive a CSI-RS on the configured first CSI-RS resource; **characterized by** the CSI-RS being received according to a modulation and coding scheme, MCS, backoff.

**Patentansprüche**

1. Verfahren, das in einem Netzwerkknoten (16) implementiert wird, der zum Kommunizieren mit einer drahtlosen Vorrichtung, WD, (22) konfiguriert ist, wobei das Verfahren Folgendes umfasst:

Konfigurieren (S142) einer ersten Kanalzustandsinformations-Referenzsignalressource, CSI-RS-Ressource, in einem Satz von Kandidaten-CSI-RS-Ressourcen, wobei die erste CSI-RS-Ressource eine zweite CSI-RS-Ressource in dem Satz von Kandidaten-CSI-RS-Ressourcen teilweise überlappt, wobei die erste CSI-RS-Ressource mit einer ersten Zelle assoziiert ist, und die zweite CSI-RS-Ressource mit einer zweiten Zelle assoziiert ist; und

Senden (S144) eines CSI-RS auf der konfigurierten ersten CSI-RS-Ressource;

wobei das Verfahren **dadurch gekennzeichnet ist, dass** es Folgendes umfasst:

Anwenden eines Modulations- und Codierungsschema-Backoffs, MCS-Backoffs, in einem Schlitz, in dem das CSI-RS gesendet wird.

2. Verfahren nach Anspruch 1, wobei die erste CSI-RS-Ressource die zweite CSI-RS-Ressource in mindestens einer Zeit-Frequenz-Ressource innerhalb eines Schlitzes teilweise überlappt.

3. Verfahren nach Anspruch 2, wobei jede CSI-RS-Ressource in dem Satz von Kandidaten-CSI-RS-Ressourcen einen Satz von Zeit-Frequenz-Ressourcenelementen, Zeit-Frequenz-REs, innerhalb eines Schlitzes belegt und eine Teilmenge von Ressourcenelementen der ersten CSI-RS-Ressource von einer Teilmenge von Ressourcenelementen der zweiten CSI-RS-Ressource belegt wird.

4. Verfahren nach einem der Ansprüche 1-3, wobei die erste Zelle eine bedienende Zelle ist und die zweite Zelle eine Nachbarzelle ist.

5. Verfahren nach einem der Ansprüche 1-4, wobei jede Kandidaten-CSI-RS-Ressource in dem Satz von Kandidaten-CSI-RS-Ressourcen jede der anderen Kandidaten-CSI-RS-Ressourcen in dem Satz innerhalb eines Schlitzes teilweise überlappt.

6. Verfahren nach einem der Ansprüche 1 bis 5, ferner umfassend:
Zuweisen einer Ressourcenposition für die erste CSI-RS-Ressource basierend auf einer physischen Zell-ID, PCI, die mit der ersten Zelle assoziiert ist.

7. Verfahren nach Anspruch 6, wobei das Zuweisen umfasst:
Zuweisen der Ressourcenposition für die erste CSI-RS-Ressource basierend auf dem PCI-Modulus N, wobei N eine Anzahl von Ressourcenpositionen für CSI-RS-Ressourcen in dem Satz von Kandidaten CSI-RS-Ressourcen ist.

8. Verfahren nach einem der Ansprüche 6 und 7, wobei die zweite CSI-RS-Ressource auf einer PCI basiert, die mit der zweiten Zelle assoziiert ist.

9. Verfahren nach einem der Ansprüche 1-8, wobei die Kandidaten-CSI-RS-Ressourcen in dem Satz relativ zueinander innerhalb des Schlitzes basierend auf einem Indexwert verschoben werden.

10. Verfahren nach Anspruch 9, wobei die erste Zelle einen entsprechenden ersten Indexwert aufweist und die zweite Zelle einen entsprechenden zweiten Indexwert aufweist, wobei sich der zweite Indexwert von dem ersten indexwert unterscheidet.

11. Netzwerkknoten (16), konfiguriert zum Kommunizieren mit einer drahtlosen Vorrichtung, WD, (22), wobei der Netzwerkknoten (16) Verarbeitungsschaltungsanordnung (68) umfasst, wobei die Verarbeitungsschaltungsanordnung (68) so konfiguriert ist, dass sie den Netzwerkknoten (16) zu Folgendem veranlasst:

Konfigurieren einer ersten Kanalzustandsinformations-Referenzsignalressource, CSI-RS-Ressource, in einem Satz von Kandidaten-CSI-RS-Ressourcen, wobei die erste CSI-RS-Ressource eine zweite CSI-RS-Ressource in dem Satz von Kandidaten-CSI-RS-Ressourcen teilweise überlappt, wobei die erste CSI-RS-Ressource mit einer ersten Zelle assoziiert ist, und die zweite CSI-RS-Ressource mit einer zweiten Zelle assoziiert ist; und
Senden eines CSI-RS auf der konfigurierten ersten CSI-RS-Ressource;
wobei die Verarbeitungsschaltungsanordnung (68) **dadurch gekennzeichnet ist, dass** sie den Netzwerkknoten (16) zu Folgendem veranlasst:
Anwenden eines Modulations- und Codierungsschema-Backoffs, MCS-Backoffs, in einem Schlitz, in dem das CSI-RS gesendet wird.

12. Verfahren, das in einer drahtlosen Vorrichtung (22) implementiert wird, die zum Kommunizieren mit einem Netzwerkknoten (16) konfiguriert ist, wobei das Verfahren Folgendes umfasst:

Empfangen (S146) einer Konfiguration einer ersten Kanalzustandsinformations-Referenzsignalressource, CSI-RS-Ressource, in einem Satz von Kandidaten-CSI-RS-Ressourcen, wobei die erste CSI-RS-Ressource eine zweite CSI-RS-Ressource in dem Satz von Kandidaten-CSI-RS-Ressourcen teilweise überlappt, wobei die erste CSI-RS-Ressource mit einer ersten Zelle assoziiert ist, und die zweite CSI-RS-Ressource mit einer zweiten Zelle assoziiert ist; und
Empfangen (S148) eines CSI-RS auf der konfigurierten ersten CSI-RS-Ressource;
wobei das Verfahren **dadurch gekennzeichnet ist, dass** das CSI-RS gemäß einem Modulations- und Codierungsschema-Backoff, MCS-Backoff, empfangen wird.

13. Drahtlose Vorrichtung, WD, (22), konfiguriert zum Kommunizieren mit einem Netzwerkknoten (16), wobei die WD (22) Verarbeitungsschaltungsanordnung (84) umfasst, wobei die Verarbeitungsschaltungsanordnung (84) so konfiguriert ist, dass sie die WD (22) zu Folgendem veranlasst:

Empfangen einer Konfiguration einer ersten Kanalzustandsinformations-Referenzsignalressource, CSI-RS-Ressource, in einem Satz von Kandidaten-CSI-RS-Ressourcen, wobei die erste CSI-RS-Ressource eine zweite CSI-RS-Ressource in dem Satz von Kandidaten-CSI-RS-Ressourcen teilweise überlappt, wobei die erste CSI-RS-Ressource mit einer ersten Zelle assoziiert ist, und die zweite CSI-RS-Ressource mit einer zweiten Zelle assoziiert ist; und
Empfangen eines CSI-RS auf der konfigurierten ersten CSI-RS-Ressource;

**dadurch gekennzeichnet, dass** das CSI-RS gemäß einem Modulations- und Codierungsschema-Backoff, MCS-Backoff, empfangen wird.

**Revendications**

1. Procédé mis en œuvre dans un nœud de réseau (16) configuré pour communiquer avec un dispositif sans fil, WD (22), le procédé comprenant :

    la configuration (S142) d'une première ressource de signal de référence d'informations d'état de canal, CSI-RS, dans un ensemble de ressources CSI-RS candidates, la première ressource CSI-RS chevauchant partiellement une deuxième ressource CSI-RS dans l'ensemble de ressources CSI-RS candidates, la première ressource CSI-RS étant associée à une première cellule et la deuxième ressource CSI-RS étant associée à une deuxième cellule ; et
    la transmission (S144) d'un CSI-RS sur la première ressource CSI-RS configurée ;
    le procédé étant **caractérisé en ce qu'**il comprend :
    l'application d'une réduction de puissance de schéma de modulation et de codage, MCS, dans un créneau dans lequel le CSI-RS est transmis.

2. Procédé selon la revendication 1, dans lequel la première ressource CSI-RS chevauche partiellement la deuxième ressource CSI-RS dans au moins une ressource de temps-fréquence à l'intérieur d'un créneau.

3. Procédé selon la revendication 2, dans lequel chaque ressource CSI-RS dans l'ensemble de ressources CSI-RS candidates occupe un ensemble d'éléments de ressource, RE, de temps-fréquence à l'intérieur d'un créneau et un sous-ensemble d'éléments de ressource de la première ressource CSI-RS est occupé par un sous-ensemble d'éléments de ressource de la deuxième ressource CSI-RS.

4. Procédé selon l'une quelconque des revendications 1 à 3, dans lequel la première cellule est une cellule de desserte et la deuxième cellule est une cellule voisine.

5. Procédé selon l'une quelconque des revendications 1 à 4, dans lequel chaque ressource CSI-RS candidate dans l'ensemble de ressources CSI-RS candidates chevauche partiellement chacune des autres ressources CSI-RS candidates dans l'ensemble à l'intérieur d'un créneau.

6. Procédé selon l'une quelconque des revendications 1 à 5, comprenant en outre :
    l'allocation d'une position de ressource pour la première ressource CSI-RS sur la base d'un ID de cellule physique, PCI, associé à la première cellule.

7. Procédé selon la revendication 6, dans lequel l'allocation comprend :
    l'allocation de la position de ressource pour la première ressource CSI-RS sur la base du PCI module N, N étant un nombre de positions de ressources pour des ressources CSI-RS dans l'ensemble de ressources CSI-RS candidates.

8. Procédé selon l'une quelconque des revendications 6 et 7, dans lequel la deuxième ressource CSI-RS est basée sur un PCI associé à la deuxième cellule.

9. Procédé selon l'une quelconque des revendications 1 à 8, dans lequel les ressources CSI-RS candidates dans l'ensemble sont décalées les unes par rapport aux autres à l'intérieur d'un créneau sur la base d'une valeur d'indice.

10. Procédé selon la revendication 9, dans lequel la première cellule présente une première valeur d'indice correspondante et la deuxième cellule présente une deuxième valeur d'indice correspondante, la deuxième valeur d'indice étant différente de la première valeur d'indice.

11. Nœud de réseau (16) configuré pour communiquer avec un dispositif sans fil, WD (22), le nœud de réseau (16) comprenant une circuiterie de traitement (68), la circuiterie de traitement (68) étant configurée pour amener le nœud de réseau (16) à :

    configurer une première ressource de signal de référence d'informations d'état de canal, CSI-RS, dans un ensemble de ressources CSI-RS candidates, la première ressource CSI-RS chevauchant partiellement une deuxième ressource CSI-RS dans l'ensemble de ressources CSI-RS candidates, la première ressource CSI-RS étant associée à une première cellule et la deuxième ressource CSI-RS étant associée à une deuxième cellule ; et transmettre un CSI-RS sur la première ressource CSI-RS configurée ;

dans lequel la circuiterie de traitement (68) est **caractérisée en ce qu'**elle amène le nœud de réseau (16) à : appliquer une réduction de puissance de schéma de modulation et de codage, MCS, dans un créneau dans lequel le CSI-RS est transmis.

12. Procédé mis en œuvre dans un dispositif sans fil, WD (22), configuré pour communiquer avec un nœud de réseau (16), le procédé comprenant :

la réception (S146) d'une configuration d'une première ressource de signal de référence d'informations d'état de canal, CSI-RS, dans un ensemble de ressources CSI-RS candidates, la première ressource CSI-RS chevauchant partiellement une deuxième ressource CSI-RS dans l'ensemble de ressources CSI-RS candidates, la première ressource CSI-RS étant associée à une première cellule et la deuxième ressource CSI-RS étant associée à une deuxième cellule ; et la réception (S148) d'un CSI-RS sur la première ressource CSI-RS configurée ; le procédé étant **caractérisé en ce que** le CSI-RS est reçu selon une réduction de puissance de schéma de modulation et de codage, MCS.

13. Dispositif sans fil, WD (22), configuré pour communiquer avec un nœud de réseau (16), le WD (22) comprenant une circuiterie de traitement (84), la circuiterie de traitement (84) étant configurée pour amener le WD (22) à :

recevoir une configuration d'une première ressource de signal de référence d'informations d'état de canal, CSI-RS, dans un ensemble de ressources CSI-RS candidates, la première ressource CSI-RS chevauchant partiellement une deuxième ressource CSI-RS dans l'ensemble de ressources CSI-RS candidates, la première ressource CSI-RS étant associée à une première cellule et la deuxième ressource CSI-RS étant associée à une deuxième cellule ; et recevoir un CSI-RS sur la première ressource CSI-RS configurée ; **caractérisé en ce que** le CSI-RS est reçu selon une réduction de puissance de schéma de modulation et de codage, MCS.

FIG. 1

FIG. 2

FIG. 3

FIG. 4

FIG. 5

FIG. 6

FIG. 7

BEGIN

S100
Host computer
provides user
data

↔

S102
Host computer
executes host
application

S104
Host computer
initiates
transmission
carrying the
user data to
the Wireless
Device

S106
Network Node
transmits the
user data

S108
Wireless Device
executes
client
application

END

FIG. 8

BEGIN

S110
Host computer
provides user
data

S112
Host computer
transmission
initiates
carrying the
user data to
the
Wireless
Device

S114
Wireless
Device recives
the user data

END

FIG. 9

BEGIN

**S116**
Wireless Device receives input data provided at host computer

**S118**
Wireless Device executes client application

**S120**
Wireless Device provides user data

**S122**
Wireless Device executes client application

**S124**
Wireless Device initiates transmission of the user data to the host computer

**S126**
Host computer receives user data transmitted from the Wireless Device

END

# FIG. 10

BEGIN

**S128**
Network Node receives user data from Wireless Device

**S130**
Network Node initiates transmission of user data to the host computer

**S132**
Host computer receives the user data

END

# FIG. 11

36

BEGIN

Configure a channel state information reference signal (CSI-RS) resource of a set of candidate CSI-RS resources, the CSI-RS resource partially overlapping at least one other CSI-RS resource in the set
S134

Optionally, transmit CSI-RS signaling on the configured CSI-RS resource
S136

END

# FIG. 12

BEGIN

Receive a configuration of a channel state information reference signal (CSI-RS) resource of a set of candidate CSI-RS resources, the CSI-RS resource partially overlapping at least one other CSI-RS resource in the set
S138

Optionally, receive CSI-RS signaling on the configured CSI-RS resource
S140

END

# FIG. 13

BEGIN

Configure a channel state information reference signal (CSI-RS) resource of a set of candidate CSI-RS resources, the first CSI-RS resource partially overlapping a second CSI-RS resource in the set of candidate CSI-RS resources, the first CSI-RS resource being associated with a first cell and the second CSI-RS resource being associated with a second cell
S142

Transmit CSI-RS signaling on the configured first CSI-RS resource
S144

END

## FIG. 14

BEGIN

Receive a configuration of a first channel state information reference signal, CSI-RS, resource in a set of candidate CSI-RS resources, the first CSI-RS resource partially overlapping a second CSI-RS resource in the set of candidate CSI-RS resources, the first CSI-RS resource being associated with a first cell and the second CSI-RS resource being associated with a second cell
S146

Receive CSI-RS signaling on the configured first CSI-RS resource
S148

END

## FIG. 15

PDCCH
DMRS symbol
Serving cell CSI-RS
Interfering cell CSI-RS
Overlapped Res
Available for PDSCH

FIG. 16

**Config A**

32 ports

CSI-RS row index 16 or 17

bitmask "other" = 001111

firstOFDMSymbolInTimeDomain =5

firstOFDMSymbolInTimeDomain2 =7

PDCCH

DMRS symbol

CSI-IM allocation (example for PCI-mod6=0)

CSI-RS

Available for PDCCH

FIG. 17

| Config B | | |
|---|---|---|
| 32 ports | | |
| CSI-RS row index  16 or 17 | | |
| bitmask "other" = 011110 | | |
| firstOFDMSymbolInTimeDomain =5 | | |
| firstOFDMSymbolInTimeDomain2 =7 | | |

FIG. 18

FIG. 19

| Config C | | | |
|---|---|---|---|
| 32 ports | | | |
| CSI-RS row index  16 or 17 | | | |
| bitmask "other" = 111100 | | | |
| firstOFDMSymbolInTimeDomain =5 | | | |
| firstOFDMSymbolInTimeDomain2 =7 | | | |

FIG. 20

FIG. 21

FIG. 22

PDCCH
DMRS symbol
CSI-IM allocation
Serving cell CSI-RS
Interfering cells CSI-RS (within re-use group)
Available for PDSCH

FIG. 23

Legend:
- PDCCH
- DMRS symbol
- CSI-IM allocation (example for PCI-mod6=0)
- CSI-RS
- Available for PDCCH

| Config A | | | | |
|---|---|---|---|---|
| 16 ports | | | | |
| CSI-RS row index 11 or 12 | | | | |
| bitmask "other" = 001111 | | | | |
| firstOFDMSymbolInTimeDomain =5 | | | | |
| firstOFDMSymbolInTimeDomain2 is not used | | | | |

FIG. 24

EP 4 144 022 B1

FIG. 25

| Config C | | | | |
|---|---|---|---|---|
| 16 ports | | | | |
| CSI-RS row index 11 or 12 | | | | |
| bitmask "other" = 111100 | | | | |
| firstOFDMSymbolInTimeDomain =5 | | | | |
| firstOFDMSymbolInTimeDomain2 is not used | | | | |

FIG. 26

EP 4 144 022 B1

Config D
16 ports
CSI-RS row index 11 or 12
bitmask "other" = 001111
firstOFDMSymbolInTimeDomain =7
firstOFDMSymbolInTimeDomain2 is not used

FIG. 27

FIG. 28

EP 4 144 022 B1

Config F
16 ports
CSI-RS row index 11 or 12
bitmask "other" = 111100
firstOFDMSymbolInTimeDomain =7
firstOFDMSymbolInTimeDomain2 is not used

FIG. 29

EP 4 144 022 B1

Legend:
- PDCCH
- DMRS symbol
- CSI-IM allocation (example for PCI-mod6=0)
- CSI-RS
- Available for PDCCH

**Config A1**

| Config A1 | | | |
|---|---|---|---|
| 8 ports | | | |
| CSI-RS row index 6 | | | |
| bitmask "other" = 001111 | | | |
| firstOFDMSymbolInTimeDomain =5 | | | |
| firstOFDMSymbolInTimeDomain2 is not used | | | |

FIG. 30

|   | 0 | 1 | 2 | 3 | 4 | 5 | 6 | 7 | 8 | 9 | 10 | 11 | 12 | 13 |
|---|---|---|---|---|---|---|---|---|---|---|----|----|----|----|

Config B1

8 ports

CSI-RS row index 6

bitmask "other" = 011110

firstOFDMSymbolInTimeDomain =5

firstOFDMSymbolInTimeDomain2 is not used

FIG. 31

| Config C1 | | | |
|---|---|---|---|
| 8 ports | | | |
| CSI-RS row index 6 | | | |
| bitmask "other" = 111100 | | | |
| firstOFDMSymbolInTimeDomain =5 | | | |
| firstOFDMSymbolInTimeDomain2 is not used | | | |

FIG. 32

Config D1
8 ports
CSI-RS row index 6
bitmask "other" = 001111
firstOFDMSymbolInTimeDomain =7
firstOFDMSymbolInTimeDomain2 is not used

FIG. 33

Config E1
8 ports
CSI-RS row index 6
bitmask "other" = 011110
firstOFDMSymbolInTimeDomain =7
firstOFDMSymbolInTimeDomain2 is not used

FIG. 34

| Config F1 | | | | |
|---|---|---|---|---|
| 8 ports | | | | |
| CSI-RS row index 6 | | | | |
| bitmask "other" = 111100 | | | | |
| firstOFDMSymbolInTimeDomain =7 | | | | |

firstOFDMSymbolInTimeDomain2 is not used

FIG. 35

| Config A2 | | | |
|---|---|---|---|
| 8 ports | | | |
| CSI-RS row index 7 or 8 | | | |
| bitmask "other" = 000011 | | | |
| firstOFDMSymbolInTimeDomain =5 | | | |
| firstOFDMSymbolInTimeDomain2 is not used | | | |

FIG. 36

EP 4 144 022 B1

FIG. 37

| Config B2 | | | |
|---|---|---|---|
| 8 ports | | | |
| CSI-RS row index  7 or 8 | | | |
| bitmask "other" = 000110 | | | |
| firstOFDMSymbolInTimeDomain =5 | | | |
| firstOFDMSymbolInTimeDomain2 is not used | | | |

EP 4 144 022 B1

|            | 0 | 1 | 2 | 3 | 4 | 5 | 6 | 7 | 8 | 9 | 10 | 11 | 12 | 13 |

Config C2

8 ports

CSI-RS row index  7 or 8

bitmask "other" = 001100

firstOFDMSymbolInTimeDomain =5

firstOFDMSymbolInTimeDomain2 is not used

FIG. 38

| Config D2 | | | | |
|---|---|---|---|---|
| 8 ports | | | | |
| CSI-RS row index 7 or 8 | | | | |
| bitmask "other" = 000011 | | | | |
| firstOFDMSymbolInTimeDomain =7 | | | | |
| firstOFDMSymbolInTimeDomain2 is not used | | | | |

FIG. 39

| Config E2 | | | |
|---|---|---|---|
| 8 ports | | | |
| CSI-RS row index 7 or 8 | | | |
| bitmask "other" = 000110 | | | |
| firstOFDMSymbolInTimeDomain =7 | | | |
| firstOFDMSymbolInTimeDomain2 is not used | | | |

FIG. 40

| Config F2 | | | |
|---|---|---|---|
| 8 ports | | | |
| CSI-RS row index 7 or 8 | | | |
| bitmask "other" = 001100 | | | |
| firstOFDMSymbolInTimeDomain =7 | | | |
| firstOFDMSymbolInTimeDomain2 is not used | | | |

FIG. 41

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020058743 A1

**Non-patent literature cited in the description**

- **HUAWEI**. Inter-cell CSI-RS Analysis. *3GPP DRAFT*